(19) Europäisches Patentamt / European Patent Office / Office européen des brevets

(11) **EP 3 407 482 B1**

(12) **EUROPEAN PATENT SPECIFICATION**

(45) Date of publication and mention of the grant of the patent:
**10.03.2021 Bulletin 2021/10**

(21) Application number: **16886405.6**

(22) Date of filing: **28.09.2016**

(51) Int Cl.:
*H02P 9/04* (2006.01)      *H02K 7/18* (2006.01)
*B60L 1/00* (2006.01)      *H02P 3/22* (2006.01)
*H02P 9/06* (2006.01)      *B60L 53/00* (2019.01)

(86) International application number:
**PCT/JP2016/078631**

(87) International publication number:
**WO 2017/126165 (27.07.2017 Gazette 2017/30)**

(54) **ENGINE-EQUIPPED VEHICLE**

MIT MOTOR AUSGESTATTETES FAHRZEUG

VÉHICULE ÉQUIPÉ D'UN MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.01.2016 JP 2016009152**

(43) Date of publication of application:
**28.11.2018 Bulletin 2018/48**

(73) Proprietor: **Yamaha Hatsudoki Kabushiki Kaisha Iwata-shi, Shizuoka 438-8501 (JP)**

(72) Inventors:
• **HINO, Haruyoshi**
  **Iwata-shi**
  **Shizuoka 438-8501 (JP)**
• **OBA, Tatsuhiro**
  **Iwata-shi**
  **Shizuoka 438-8501 (JP)**
• **NISHIKAWA, Takahiro**
  **Iwata-shi**
  **Shizuoka 438-8501 (JP)**

• **KAJIWARA, Kenichi**
  **Iwata-shi**
  **Shizuoka 438-8501 (JP)**
• **KOSUGI, Makoto**
  **Iwata-shi**
  **Shizuoka 438-8501 (JP)**

(74) Representative: **Grünecker Patent- und Rechtsanwälte PartG mbB Leopoldstraße 4 80802 München (DE)**

(56) References cited:
WO-A1-2015/093577      WO-A1-2015/093577
JP-A- 2002 186 293      JP-A- 2003 164 002
JP-A- 2004 216 997      JP-A- 2012 196 104
JP-A- 2014 079 099      US-A1- 2007 216 327
US-A1- 2013 207 581

EP 3 407 482 B1

## Description

Technical Field

The present teaching relates to an engine-equipped vehicle.

Background Art

In an engine-equipped vehicle which includes an engine, the engine outputs rotational power produced by a combustion operation, and the rotational power propels the engine-equipped vehicle.

For example, Patent Literature 1 (PTL 1) shows a motorcycle including an internal combustion engine and a belt type continuously variable transmission. In the motorcycle of PTL 1, power of the internal combustion engine is gear-shifted and transmitted to a drive wheel. In the motorcycle, at a time of deceleration with a closed throttle opening degree, no engine output is generated, and engine braking is produced in accordance with an engine loss such as a pumping loss.

In other prior art, PTL 2 proposes to, for an engine unit and the like that has a high-load region and a low-load region, suppress unevenness in the position at which the rotation of a crankshaft halts after halting combustion of a four-stroke engine body. The engine unit is provided with: a four-stroke engine body having a high-load region and a low-load region; a three-phase brushless motor that starts the four-stroke engine body and that generates electricity after the startup of the four-stroke engine body; an inverter having a plurality of switching units; and a control device. After halting the combustion operation of the four-stroke engine body and while the crankshaft is performing positive rotation, the control device controls the plurality of switching elements in a manner so that the terminals of a plurality of coils are short-circuited, thus imparting resistance to the positive rotation of the crankshaft, and thereby halting the positive rotation of the crankshaft during the compression stroke of the four-stroke engine body.

In other prior art, PTL 3 proposes to provide an antilock brake control system for a vehicle mounted with motors which can: efficiently recover energy through regeneration when an antilock brake is operated; improve braking performance of the vehicle; and miniaturize friction brakes. The antilock brake control system is applied to the vehicle mounted with motors comprising: motors which individually drive right and left drive wheels; and regenerative braking means. The antilock brake control system comprises: lock determination means which determines that a wheel has a tendency to be locked from either or both of a slip ratio of the wheel and a change rate of the slip ratio; and regenerative braking antilock control means which, when the wheel is determined to have the tendency to be locked by the lock determination means, controls regenerative braking through the regenerative braking means in a manner that reduces regenerative braking torque less than the same corresponding to a braking command value and prevents the wheel from being locked.

Citation List

Patent Literature

PTL 1: Japanese Patent Application Laid-Open No. 2012-225443
PTL 2: WO 2015/093577 A1
PTL 3: Japanese Patent Application Laid-Open No. 2014-79099

Summary of Invention

Technical Problem

Not only in the motorcycle as shown in PTL 1 but generally in engine-equipped vehicles, a design attempt has been made to suppress fuel consumption in its engine. For example, an attempt is made to suppress fuel consumption in the engine by lowering the ratio of the rotation speed of the engine to the speed of the engine-equipped vehicle. For example, an attempt is made to suppress fuel consumption in the engine by adopting a transmission in which a lower gear ratio than usual is set as its gear shifting characteristics (i.e., high-geared) as a transmission that changes the gear ratio in accordance with an inputted rotation speed. For example, an attempt is made to suppress fuel consumption in the engine by reducing a resistance to operations of the throttle grip in a deceleration direction downshifts the transmission to a higher gear ratio. Specifically, the continuously variable transmission provided in the motorcycle of PTL 1 is an electronic type continuously variable transmission including a gear-shifting actuator. In the motorcycle shown in PTL 1, when the throttle grip is turned in the deceleration direction, the gear-shifting actuator is driven to downshift the transmission to a higher gear ratio. At a time of deceleration by engine braking, however, causing a downshift of the transmission by driving the actuator may sometimes make a rider feel uncomfortable for the deceleration.

It is difficult to freely create a feeling of deceleration favorable for a rider by an engine braking control, with suppression of fuel consumption. This is not a problem peculiar to the motorcycle as shown in PTL 1 alone, but is a problem that can be shared by engine-equipped vehicles including engines in general.

An object of the present teaching is to give more design freedom in terms of a feeling of deceleration at a time when an engine-equipped vehicle including an engine decelerates, while suppressing fuel consumption in the engine of the engine-equipped vehicle.

Solution to Problem

The present inventors made studies about a feeling of deceleration at a time of deceleration in cases where an engine operation resistance is lowered and where a low gear ratio is set as gear shifting characteristics, for example. The present inventors focused on a permanent magnet type AC generator which is attached to the engine. The permanent magnet type AC generator generates electric power in accordance with rotation of a crankshaft. The permanent magnet type AC generator applies a load to rotation of the crankshaft, the magnitude of the load being depending on a current produced in the electric power generation. The permanent magnet type AC generator supplies a current produced in the electric power generation to an apparatus and a battery that are provided in the engine-equipped vehicle. If the battery reaches a full charge state, the permanent magnet type AC generator supplies a current to an electric power consuming apparatus alone. The current that the permanent magnet type AC generator outputs at this time is smaller than a current that the permanent magnet type AC generator outputs at a time of supplying the current to the electric power consuming apparatus and the battery. That is, if the battery reaches the full charge state, a current outputted by the permanent magnet type AC generator decreases, and thus a load that the permanent magnet type AC generator applies to rotation of the crankshaft decreases, too.

The present inventors made further studies about controlling the permanent magnet type AC generator. As a result, the present inventors discovered that bringing windings included in the permanent magnet type AC generator into a short-circuit state enables a higher load to be applied to forward rotation of the crankshaft as compared with when the battery is in the full charge state. Using a load of the permanent magnet type AC generator as a braking force against rotation of the crankshaft can increase an engine braking force from the viewpoint of a drive member such as a wheel. In other words, due to a braking force caused by short-circuiting the windings, a braking force of engine braking increases from the viewpoint of the drive member. In designing the engine-equipped vehicle, therefore, a transmission in which a low gear ratio is set as its gear shifting characteristics is also adoptable. In addition, even when a resistance to operations of the engine itself is reduced, a decrease in the braking force of engine braking from the viewpoint of the drive member can be suppressed. Reducing the resistance to operations of the engine itself leads to suppression of fuel consumption in the engine. The engine-equipped vehicle of the present teaching gives more design freedom in terms of a feeling of deceleration at a time of deceleration, with suppression of fuel consumption in the engine.

The invention is defined in claim 1.

In the engine-equipped vehicle of (1), the drive member receives rotational power outputted from the engine via the crankshaft. This makes the drive member drive the engine-equipped vehicle. The permanent magnet type AC generator includes the rotor that is connected to the crankshaft so as to rotate with its speed ratio to the crankshaft being fixed.

The rotor is connected to the crankshaft at a location outside the power transmission path between the crankshaft and the drive member.

If an instruction to decrease rotational power of the engine is given by the acceleration command part while the engine-equipped vehicle is in motion, the control device directs the plurality of switching parts to bring the winding into the short-circuit state such that the permanent magnet type AC generator applies a braking force to forward rotation of the crankshaft. The control device directs the plurality of switching parts included in the inverter to bring the winding of the permanent magnet type AC generator into the short-circuit state. When the winding of the permanent magnet type AC generator is short-circuited, an induced voltage of the winding causes a braking force against rotation of the rotor to occur in the permanent magnet type AC generator. The rotor of the permanent magnet type AC generator is connected to the crankshaft so as to rotate with its speed ratio to the crankshaft being fixed. Thus, the permanent magnet type AC generator applies brake which is caused by the induced voltage to forward rotation of the engine crankshaft. The braking force of engine braking increases from the viewpoint of the drive member. Accordingly, in the engine-equipped vehicle of (1), for example, setting a resistance to operations of the engine itself or a gear ratio in gear shifting characteristics so as to suppress fuel consumption in the engine is less influential to a feeling of deceleration.

The engine-equipped vehicle of (1) can give more design freedom in terms of a feeling of deceleration at a time of deceleration, with suppression of fuel consumption in the engine.

(2) The engine-equipped vehicle of (1), wherein under a state where an instruction to decrease the rotational power of the engine is given by the acceleration command part while the engine-equipped vehicle is in motion, the control device switches a control of directing the plurality of switching parts included in the inverter to bring the winding of the permanent magnet type AC generator into a short-circuit state such that the permanent magnet type AC generator applies a braking force to forward rotation of the crankshaft and a control of directing the plurality of switching parts to supply the battery with a current produced in electric power generation by the permanent magnet type AC generator rotated by the crankshaft.

In the configuration of (2), the control of bringing the winding into the short-circuit state and the control of supplying the battery with a current produced in electric power generation are switched from one to the other, under a state where an instruction to decrease rotational power of the engine is given by the acceleration command part while the engine-equipped vehicle is in motion. The switching between the control of bringing the winding into the short-circuit state and the control of supplying the battery with a current produced in electric power generation is performed in accordance with the state of charge of the battery. If the control by the control device Is switched to the control of bringing the winding into the short-circuit state, current supply from the permanent magnet type AC generator to both the battery and the electric power consuming apparatus is stopped. In this case, the electric power consuming apparatus operates while consuming electric power charged in the battery. This brings the battery into a discharge state. Electric power stored in the battery decreases.

Electric power stored in the battery is decreasing at a time point when the control by the control device is switched to the control of supplying the battery with a current produced in electric power generation in accordance with the state of charge of the battery. Thus, a larger current flows to the battery as compared with when, for example, the battery is full charge. The control of bringing the winding into the short-circuit state functions as means for constructively lowering the state of charge of the battery. This enables, in the control of supplying the battery with a current produced in electric power generation, the permanent magnet type AC generator to produce a larger braking force as compared with when, for example, the battery is in a state approximate to full charge.

The permanent magnet type AC generator can produce a larger braking force as compared with when, for example, the battery is in the full charge state, under both the control of bringing the winding Into the short-circuit state and the control of supplying the battery with a current produced in electric power generation. A large braking force can be used by switching between the control of bringing the winding into the short-circuit state and the control of supplying the battery with a current produced in electric power generation in accordance with the state of charge of the battery while an instruction to decrease rotational power Is given. Accordingly, further design freedom in terms of a feeling of deceleration at a time of deceleration can be given with suppression of fuel consumption in the engine.

Desirably, the configuration of (2) further includes the following configuration. Here, "the control of bringing the winding of the permanent magnet type AC generator into the short-circuit state" will be referred to as "short-circuit control", and "the control of supplying the battery with a current produced in electric power generation by the permanent magnet type AC generator" will be referred to as "charge control". The short-circuit control and the charge control produce different braking forces against the engine-equipped vehicle. Of the short-circuit control and the charge control, a control producing a higher braking force will be referred to as "high braking force control", and a control producing a lower braking force will be referred to as "low braking force control". The engine-equipped vehicle decelerates under both the high braking force control and the low braking force control. The deceleration (deceleration amount / time) of the engine-equipped vehicle obtained under the high braking force control is greater than the deceleration of the engine-equipped vehicle obtained under the low braking force control. If, for example, a brake control is switched from the high braking force control to the low braking force control while the engine-equipped vehicle is decelerating with the deceleration obtained under the high braking force control, the deceleration of the engine-equipped vehicle decreases from the deceleration obtained under the high braking force control toward the deceleration obtained under the low braking force control. If, at this time, the brake control is switched from the low braking force control to the high braking force control before the deceleration of the engine-equipped vehicle reaches the deceleration obtained under the low braking force control, the deceleration of the engine-equipped vehicle increases toward the deceleration obtained under the high braking force control instead of approaching the deceleration obtained under the low braking force control. If the brake control is switched from the high braking force control to the low braking force control before the deceleration of the engine-equipped vehicle reaches the deceleration obtained under the high braking force control, the deceleration of the engine-equipped vehicle decreases toward the deceleration obtained under the low braking force control instead of approaching the high braking force control. When the switching between the high braking force control and the low braking force control is performed with high frequency in this manner, the deceleration of the engine-equipped vehicle is kept at a level between the deceleration obtained under the high braking force control and the deceleration obtained under the low braking force control. In other words, when the switching between the short-circuit control and the charge control is performed with high frequency, the deceleration of the engine-equipped vehicle is kept at a level between the deceleration obtained under the short-circuit control and the deceleration obtained under the charge control. In the configuration of (2) above, it is desirable that the control device switches between the short-circuit control and the charge control with such frequency that the deceleration of the engine-equipped vehicle is kept at a level between the deceleration obtained under the short-circuit control and the deceleration obtained under the charge control in at least part of a period in which an instruction to decrease the rotational power of the engine is given by the acceleration command part while the engine-equipped vehicle is in motion. This can achieve suppression of fuel consumption and improvement of design freedom in terms of a feeling of deceleration, while suppressing a change of the deceleration of the engine-equipped vehicle.

As described above, a braking force applied to forward rotation of the crankshaft due to the control of supplying the battery with a current produced in electric power generation by the permanent magnet type AC generator may be different from a braking force applied to forward rotation of the crankshaft due to the control of bringing the winding of the permanent magnet type AC generator into the short-circuit state. However it is also preferable that in the control of supplying the battery with a current produced in electric power generation by the permanent magnet type AC generator, the switching parts are controlled so as to apply a braking force equal to a braking force applied to forward rotation of the crankshaft under the control of bringing the winding of the permanent magnet type AC generator into the short-circuit state. In this case, a variation in the braking force at a time of switching the control is suppressed. This gives less uncomfortableness of deceleration to a rider at a time of switching the control.

(3) The engine-equipped vehicle of (1) or (2), wherein

under a state where an instruction to decrease the rotational power of the engine is given by the acceleration command part while the engine-equipped vehicle is in motion, the control device: repeatedly switches between a control of directing the plurality of switching parts of the inverter to bring the winding of the permanent magnet type AC generator into a short-circuit state such that the permanent magnet type AC generator applies a braking force to forward rotation of the crankshaft and a control of directing the plurality of switching parts to supply the battery with a current produced in electric power generation by the permanent magnet type AC generator; and controls a ratio between a period in which the control of directing the plurality of switching parts to bring the winding of the permanent magnet type AC generator into a short-circuit state is applied and a period in which the control of directing the plurality of switching parts to supply the battery with a current produced in electric power generation by the permanent magnet type AC generator is applied, the control of the ratio being performed so as to allow the permanent magnet type AC generator to output a current larger than a current consumed by an electric power consuming apparatus during the period in which the control of directing the plurality of switching parts to supply the battery with a current produced in electric power generation by the permanent magnet type AC generator is applied, the electric power consuming apparatus consuming electric power generated by the permanent magnet type AC generator.

In the configuration of (3), under a state where an instruction to decrease rotational power of the engine is given by the acceleration command part while the engine-equipped vehicle is in motion, the control of directing the plurality of switching parts of the inverter to bring the winding of the permanent magnet type AC generator into the short-circuit state and the control of directing the plurality of switching parts to supply the battery with a current produced in electric power generation by the permanent magnet type AC generator are repeated.

During the period in which the control of directing the plurality of switching parts to bring the winding of the permanent magnet type AC generator into the short-circuit state is applied, the battery is in the discharge state. Thus, electric power stored in the battery decreases. During the period in which the control of directing the plurality of switching parts to supply the battery with a current produced in electric power generation by the permanent magnet type AC generator is applied, the current produced in electric power generation by the permanent magnet type AC generator is supplied from the inverter to the battery and to the electric power consuming apparatus. The battery is charged. When the battery is not in the full charge state, the battery is charged by the permanent magnet type AC generator outputting via the inverter a current larger than a current consumed by the electric power consuming apparatus. Accordingly, providing a ratio of the period in which the winding is in the short-circuit state, during which the battery is in the discharge state, enables an increased braking force to be produced during the electric power generation period.

In the configuration of (3), the ratio between the period in which the control of bringing the winding into the short-circuit state is applied and the period in which the control of supplying the battery with a current produced in electric power generation is applied is controlled so as to allow the permanent magnet type AC generator to output a current larger than a current consumed by the electric power consuming apparatus. Accordingly, a large braking force is obtained in both the period in which the winding is in the short-circuit state and the period in which the permanent magnet type AC generator generates electric power. This gives further design freedom in terms of a feeling of deceleration at a time of deceleration.

No particular limitation is put on a switching cycle between the control of bringing the winding into the short-circuit state and the control of supplying the battery with a current produced in electric power generation. However it is preferable that the switching cycle between the control of bringing the winding into the short-circuit state and the control of supplying the battery with a current produced in electric power generation is short enough to, for example, keep the rider from recognizing a change of the braking force caused by switching. Such a configuration can suppress uncomfortableness felt by the rider in relation to a change of the braking force, even if a braking force obtained in the short-circuit state is different from a braking force obtained under the control of supplying the battery with a current produced in electric power generation.

The control of the ratio between the period in which the control of bringing the winding into the short-circuit state is applied and the period in which the control of supplying the battery with a current produced in electric power generation by the permanent magnet type AC generator is applied includes, for example, performing both of the controls for predefined periods and performing indirect adjustment of the ratio by controlling a condition other than the period. Examples of the condition other than the period include a condition for switching from one to the other between the controls.

(4) The engine-equipped vehicle of any one of (1) to (3), further including a clutch that switches between a state of transmitting rotational power of the crankshaft to the drive member and a state of blocking the transmission, wherein

in at least part of a period in which an instruction to decrease the rotational power of the engine is given by the acceleration command part while the engine-equipped vehicle is in motion and the clutch is in the state of transmitting rotational power, the control device switches between a control of directing the plurality of switching parts included in the inverter to bring the winding of the permanent magnet type AC generator into a short-circuit state such that the permanent magnet type AC generator applies a braking force to forward rotation of the crankshaft and a control of directing the plurality of switching parts to supply the battery with a current produced in electric power generation by the permanent magnet type AC generator, the switching being performed in accordance with the state of charge of the battery.

In the configuration of (4), in at least part of a period in which an instruction to decrease the rotational power of the engine is given by the acceleration command part while the engine-equipped vehicle is in motion and the clutch is in the state of transmitting rotational power, the control of bringing the winding into the short-circuit state and the control of supplying the battery with a current produced in electric power generation are switched from one to the other. Thus, under a state where the clutch transmits rotational power, a braking force against driving of the engine-equipped vehicle is applied while the state of charge of the battery can be maintained by the driving of the engine-equipped vehicle.

As for a control condition, a determination of whether or not the clutch is in the state of transmitting rotational power includes, for example, a determination of the rotation speed in the clutch which switches the state in accordance with the rotation speed and a determination based on direct detection of the state of the clutch.

(5) The engine-equipped vehicle of any one of (1) to (4), wherein

the at least one phase comprises a plurality of phases, and

in at least part of a period in which an instruction to decrease the rotational power of the engine is given by the acceleration command part while the engine-equipped vehicle is in motion, the control device directs the plurality of switching parts to bring the windings belonging to all of the plurality of phases into a short-circuit state such that the permanent magnet type AC generator applies a braking force to forward rotation of the crankshaft.

In the configuration of (5), the windings belonging to all of the plurality of phases are brought into the short-circuit state, which allows the permanent magnet type AC generator to produce a large braking force. In designing the brake control, a large braking force is adoptable. This gives further design freedom in terms of a feeling of deceleration at a time of deceleration.

(6) The engine-equipped vehicle of any one of (1) to (4), wherein

the at least one phase comprises a plurality of phases, and

in at least part of a period in which an instruction to decrease the rotational power of the engine is given by the acceleration command part while the engine-equipped vehicle is in motion, the control device brings the winding or windings belonging to part of the plurality of phases into a short-circuit state such that the permanent magnet type AC generator applies a braking force to forward rotation of the crankshaft.

The configuration of (6) can produce a smaller braking force than bringing the windings belonging to all of the plurality of phases into the short-circuit state can. In designing the brake control, a relatively small braking force is adoptable. This gives further design freedom in terms of a feeling of deceleration at a time of deceleration.

(7) The engine-equipped vehicle of any one of (1) to (6), wherein

the stator includes a stator core provided with a plurality of teeth spaced from one another by a slot in a circumferential direction, each of the plurality of teeth having a portion where the winding is wound, and

the rotor includes a permanent magnet part and a plurality of magnetic pole portions, the number of the plurality of magnetic pole portions being more than the number of the plurality of teeth, the plurality of magnetic pole portions being formed by the permanent magnet part and provided on a surface facing the stator.

In the configuration of (7), the number of the magnetic pole portions is more than the number of the teeth, and therefore the rotation speed in electrical angle of the magnet type AC generator is high. Thus, when the rotation speed of the rotor increases, impedance of the winding increases with a greater increment as compared with a configuration in which the number of the magnetic pole portions is less than the number of the teeth, for example. This suppresses an increase of a current flowing in the winding when the rotation speed of the rotor increases. As a result, a small current is outputted from the magnet type AC generator under a high rotation speed of the rotor. Thus, the amount of heat generated when the winding is in the short-circuit state under a high rotation speed of the rotor is suppressed. Accordingly, the configuration of (7) allows use of a braking force produced by bringing the winding into the short-circuit state under a high rotation speed of the crankshaft, as compared with a configuration in which the number of the magnetic pole portions is less than the number of the teeth, for example. This gives further design freedom in terms of a feeling of deceleration at a time of deceleration.

The engine-equipped vehicle of the present teaching is a vehicle equipped with an engine. The engine-equipped vehicle of the present teaching is a machine that transports persons or things. The engine-equipped vehicle includes vehicles and vessels. Examples of the vehicles include straddled vehicles. Examples of the straddled vehicles include motorcycles, motor tricycles, and ATVs (All-Terrain Vehicles). Examples of the vehicles include four-wheel vehicles. Examples of the drive member of the engine-equipped vehicle include a vehicle wheel and a vessel propeller. The drive member of the engine-equipped vehicle of the present teaching is connected to a crankshaft of the engine via a power transmission path.

The engine of the present teaching is an internal combustion engine. The engine of the present teaching includes a single-cylinder engine with one cylinder, a multi-cylinder engine, and the like. The engine of the present teaching includes a crankshaft. The engine of the present teaching includes a cylinder, a piston arranged in the cylinder so as to be movable to and fro, and a connecting rod coupled to the piston and to the crankshaft. The engine of the present teaching includes a four-stroke engine, a two-stroke engine, and the like.

The permanent magnet type AC generator of the present teaching is a generator including a permanent magnet. The permanent magnet type AC generator of the present teaching includes a stator and a rotor. The rotor of the permanent magnet type AC generator of the present teaching includes a permanent magnet. The rotor of the permanent magnet type AC generator of the present teaching includes no winding. The stator of the permanent magnet type AC generator of the present teaching includes windings. The windings are stator windings. The permanent magnet type AC generator of the present teaching includes windings belonging to a plurality of phases. The permanent magnet type AC generator of the present teaching includes windings corresponding to two phases, four phases, or more. The permanent magnet type AC generator of the present teaching, however, is able to easily perform a control when provided with windings corresponding to three phases, for example. The permanent magnet type AC generator of the present teaching includes a generator of radial gap type and a generator of axial gap type. The generator of radial gap type, which is the permanent magnet type AC generator of the present teaching, includes a generator of outer rotor type and a generator of inner rotor type, the generator of outer rotor type being provided with a rotor that rotates outside a stator, the generator of Inner rotor type being provided with a rotor that rotates inside a stator.

In a case where the permanent magnet type AC generator of the present teaching is of outer rotor type, the rotor rotates outside the stator. The crankshaft, when a rotor of the permanent magnet type AC generator of outer rotor type is connected thereto, has a greater rotational inertia than a rotational inertia obtained when a rotor of inner rotor type having the same size is connected thereto. Thus, the permanent magnet type AC generator of outer rotor type has a higher operational engagement with the crankshaft. Since the permanent magnet type AC generator of outer rotor type having the higher engagement produces a braking force, effectiveness of the braking force against the crankshaft is improved.

The permanent magnet type AC generator of the present teaching includes a permanent magnet type AC generator having a plurality of magnetic pole portions, the number of which is more than the number of teeth, and a permanent magnet type AC generator having a plurality of magnetic pole portions, the number of which is less than the number of teeth. The permanent magnet type AC generator of the present teaching is disposed outside a power transmission path. The power transmission path is provided between the crankshaft and the drive member. The power transmission path connects the crankshaft to the drive member, for example. The power transmission path includes a transmission and a clutch, for example.

In the permanent magnet type AC generator of the present teaching, the rotor is connected to the crankshaft so as to rotate with its speed ratio to the crankshaft being fixed. The rotor of the present teaching includes, for example, a rotor directly fixed to the crankshaft and a rotor fixed to the crankshaft with a transmission mechanism interposed therebetween. Examples of the transmission mechanism include a belt, a chain, a gear, a speed reducer, and a speed increaser. The rotor of the permanent magnet type AC generator is in constant connection with the crankshaft, for example.

The permanent magnet type AC generator of the present teaching generates electric power. The permanent magnet type AC generator of the present teaching includes, for example, a permanent magnet type AC generator not having a function as a motor. The engine-equipped vehicle of the present teaching may include an apparatus other than the permanent magnet type AC generator, as an apparatus for conversion between rotational power of the crankshaft and electric power. For example, the engine-equipped vehicle of the present teaching may include an engine starting motor different from the permanent magnet type AC generator. In this case, the starting motor is not connected to the inverter.

The permanent magnet type AC generator of the present teaching includes a permanent magnet type AC generator having a function as a motor. The permanent magnet type AC generator of the present teaching rotates the crankshaft with electric power of the battery at a time of starting the engine, for example. In this case, a dedicated starting motor can be omitted.

The battery of the present teaching is a chargeable battery. The battery of the present teaching is charged with electric power generated by the permanent magnet type AC generator. The battery of the present teaching is mounted to the engine-equipped vehicle. The battery of the present teaching is able to discharge electric power stored therein.

The inverter of the present teaching includes the plurality of switching parts that control a current to be outputted from the permanent magnet type AC generator to the battery and to the electric power consuming apparatus. The switching parts are transistors, for example. The switching parts include FETs (Field Effect Transistors), thyristors, and IGBTs (Insulated Gate Bipolar Transistors), for example. Functions of the inverter Include a rectification function. The inverter has a function for outputting a DC, for example. The inverter controls a current to be outputted from the permanent magnet type AC generator to the battery and to the electric power consuming apparatus. The inverter includes a bridge inverter composed of a plurality of switching parts, for example.

The control device of the present teaching includes, for example, a control device that controls engine operations. The control device of the present teaching, however, also includes a control device separate from a device that controls engine operations, for example.

The control device of the present teaching includes, for example, a device that directs the permanent magnet type AC generator to function as a motor. The control device of the present teaching, however, also includes a device that does not direct the permanent magnet type AC generator to function as a motor, for example.

The acceleration command part of the present teaching instructs that rotational power of the engine be increased or decreased, in accordance with an operation performed thereon. The acceleration command part of the present teaching is, for example, an acceleration operator that is operable by a rider of the engine-equipped vehicle. The acceleration operator is a throttle grip, for example. The acceleration operator includes a pedal, a lever, a switch, or the like. In the present teaching, a period in which an instruction to decrease rotational power of the engine is given by the acceleration command part is a period until an instruction to increase rotational power is given after the instruction to decrease rotational power of the engine is given. The period in which an instruction to decrease rotational power of the engine is given by the acceleration command part is determined by, for example, directly detecting the state of the acceleration command part. The period in which an instruction to decrease rotational power of the engine is given by the acceleration command part is determined by, for example, detecting the state of a device whose operation is along with an operation performed on the acceleration command part. The acceleration command part of the present teaching is different from a brake operation element which is operated for applying a frictional braking force to the drive member. An instruction to decrease the speed of the engine-equipped vehicle by applying a frictional braking force to the drive member is different from an instruction to decrease rotational power of the engine.

In the present teaching, the control of bringing the winding of the permanent magnet type AC generator into a short-circuit state is a control of electrically connecting, under a low resistance, an end portion of the winding included in the permanent magnet type AC generator. The control of bringing the winding into a short-circuit state is, for example, bringing switching parts connected to both ends of the winding into ON state. The control of bringing the winding into a short-circuit state includes, for example, a control of bringing, among windings corresponding to a plurality of phases, a winding or windings belonging to part of the plurality of phases into a short-circuit state, and a control of bringing windings belonging to all phases into a short-circuit state. The control of bringing the winding or windings belonging to part of the plurality of phases into a short-circuit state in part of a period in which an instruction to decrease rotational power of the engine is given while the engine-equipped vehicle is in motion includes, for example, a control of bringing a winding or windings belonging to part of a plurality of phases into a short-circuit state in part of the aforesaid period while bringing windings belonging to all of the plurality of phases into a short-circuit state in the rest of the aforesaid period. This control includes, for example, a control of switching between a short-circuit state of a winding or windings belonging to part of the plurality of phases and a short-circuit state of windings belonging to all of the plurality of phases in accordance with the degree of power decrease in the instruction to decrease power. The control of bringing the winding into a short-circuit state includes a control of always bringing the same winding or windings into a short-circuit state.

The control of supplying the battery with a current produced in electric power generation by the permanent magnet type AC generator is included in a control of directing the permanent magnet type AC generator to generate electric power. The control of supplying the battery with a current produced in electric power generation does not include a control of supplying all of a current produced in electric power generation to the electric power consuming apparatus alone without supplying it to the battery. The control of supplying a current produced in electric power generation to the battery includes a control of supplying part of a current produced in electric power generation to the electric power consuming apparatus alone without supplying it to the battery while supplying the rest of the current produced in electric power generation to the battery.

The control of switching between the control of bringing the winding into a short-circuit state and the control of supplying the battery with a current produced in electric power generation by the permanent magnet type AC generator includes a case of repeatedly switching between these controls and a case of switching between these controls only once during a period in which an instruction to decrease rotational power of the engine is given by the acceleration command part while the engine-equipped vehicle is in motion.

The control device of the present teaching includes a configuration of not switching between the above-mentioned controls. For example, the control device of the present teaching includes a configuration of performing only the control of bringing the winding into a short-circuit state during the period in which an instruction to decrease rotational power of the engine is given by the acceleration command part while the engine-equipped vehicle is in motion.

The electric power consuming apparatus of the present teaching is an apparatus that is mounted to the engine-equipped vehicle and operates while consuming electric power. The electric power consuming apparatus of the present teaching does not include a battery. The electric power consuming apparatus of the present teaching includes an apparatus that operate the engine while consuming electric power. The electric power consuming apparatus of the present teaching includes, for example, a fuel pump that supplies a fuel to the engine and an ignition device for causing ignition in the engine. The electric power consuming apparatus includes, for example, a lamp, a display device, and a heater of the engine-equipped vehicle. The electric power consuming apparatus includes, for example, a navigation device and a communication device electrically connected to the engine-equipped vehicle.

In the present teaching, the control in accordance with the state of charge of the battery includes, for example, a control in accordance with a voltage of the battery and a control in accordance with a voltage of the battery and an output current of the battery.

Advantageous Effects of Invention

The present teaching can give more design freedom in terms of a feeling of deceleration at a time of deceleration, with suppression of fuel consumption in an engine.

Brief Description of Drawings

[FIG. 1] A diagram showing an external appearance of an engine-equipped vehicle according to an embodiment of the present teaching.
[FIG. 2] A partial cross-sectional view schematically showing an outline configuration of an engine unit shown in FIG. 1.
[FIG. 3] A cross-sectional view of a permanent magnet type AC generator shown in FIG. 2, illustrating a cross-section perpendicular to its rotation axis line.
[FIG. 4] (A) is an explanatory diagram schematically showing driving characteristics of the permanent magnet type AC generator; and (B) is an explanatory diagram schematically showing power generation characteristics.
[FIG. 5] A block diagram outlining an electrical configuration of the engine-equipped vehicle shown in FIG. 1.
[FIG. 6] A flowchart of operations of the engine-equipped vehicle.
[FIG. 7] A graph showing speed changes of the engine-equipped vehicle when the engine-equipped vehicle descends a grade.

[FIG. 8] A graph showing a change of a current outputted from the permanent magnet type AC generator.
[FIG. 9] (A) is a block diagram outlining a current that flows in an inverter, a battery, and an electric power consuming apparatus in a charge control period; and (B) is a block diagram outlining a current that flows in the inverter, the battery, and the electric power consuming apparatus in a winding short-circuit control period.

Description of Embodiments

In the following, the present teaching will be described based on some preferred embodiments with reference to the drawings.

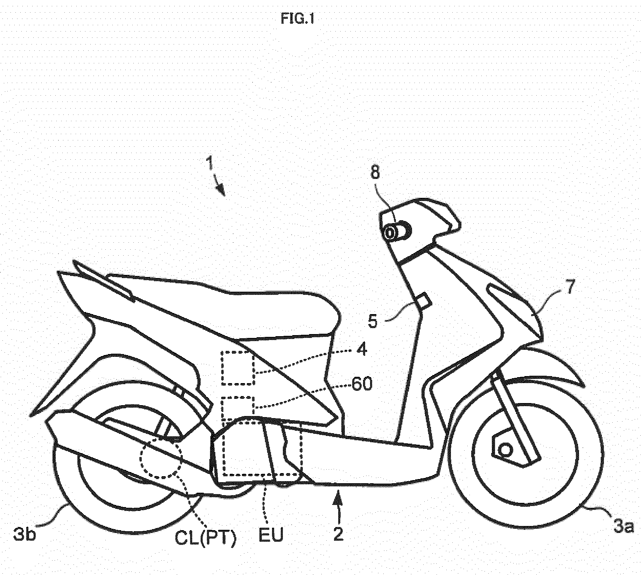

FIG. 1 is a diagram showing an external appearance of an engine-equipped vehicle according to an embodiment of the present teaching.

The engine-equipped vehicle 1 shown in FIG. 1 is a wheeled vehicle. The engine-equipped vehicle 1 includes a vehicle body 2 and wheels 3a, 3b. To be specific, the engine-equipped vehicle 1 is a straddled vehicle. The engine-equipped vehicle 1 is a motorcycle.

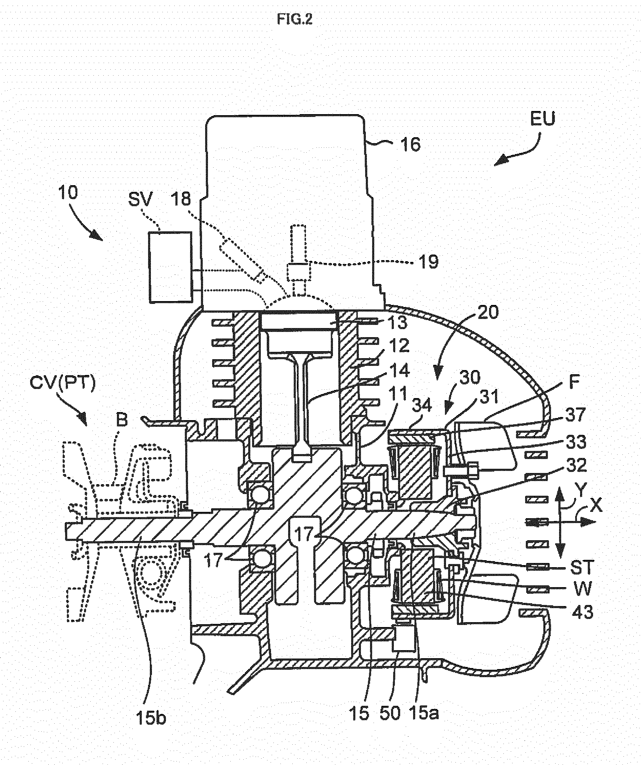

The engine-equipped vehicle 1 includes an engine unit EU. The engine unit EU includes an engine 10 and a permanent magnet type AC generator 20 (see FIG. 2). The engine-equipped vehicle 1 includes the engine 10 and the permanent magnet type AC generator 20.

The rear wheel 3b receives rotational power outputted from the engine 10, to drive the engine-equipped vehicle 1. The wheel 3b corresponds to one example of the drive member of the present teaching.

The engine-equipped vehicle 1 includes a main switch 5. The main switch 5 is a switch for supplying electric power to each part of the engine-equipped vehicle 1. The engine-equipped vehicle 1 includes an acceleration operator 8. The acceleration operator 8 is an operation element for instructing that rotational power of the engine 10 be increased and decreased. The acceleration operator 8 is one example of an acceleration command part. The engine-equipped vehicle 1 Includes a brake lever (not shown). Upon an operation on the brake lever, brake rotors (not shown) provided to the wheels 3a, 3b are pinched by pads (not shown) from opposite surface sides of the brake rotors. Due to friction, rotation of the wheels 3a, 3b decelerates. The brake lever is one example of the brake operation element. The brake operation element, when operated, receives an instruction to decrease drive power of the engine-equipped vehicle 1 exerted by the wheel 3b (drive member). The brake operation element is operated in order to apply a friction braking force to the drive member.

The engine-equipped vehicle 1 includes a headlight 7. The engine-equipped vehicle 1 includes a battery 4 that stores electric power. The engine-equipped vehicle 1 includes a control device 60 that controls each part of the engine-equipped vehicle 1.

FIG. 2 is a partial cross-sectional view schematically showing an outline configuration of the engine unit EU shown in FIG. 1.

The engine 10 includes a crank case 11, a cylinder 12, a piston 13, a connecting rod 14, and a crankshaft 15. The piston 13 is arranged in the cylinder 12 such that the piston 13 is freely movable to and fro.

The crankshaft 15 is rotatably arranged in the crank case 11. The connecting rod 14 connects the piston 13 and the crankshaft 15 to each other. A cylinder head 16 is attached to an upper portion of the cylinder 12. The cylinder 12, the cylinder head 16, and the piston 13 define a combustion chamber. The crankshaft 15 is supported on the crank case 11 via a pair of bearings 17 in a freely rotatable manner. The permanent magnet type AC generator 20 is attached to one end portion 15a of the crankshaft 15. A transmission CVT is attached to the other end portion 15b of the crankshaft 15.

The transmission CVT transmits rotational power of the crankshaft 15 to the wheel 3b which is the drive member. The transmission CVT is configured to change the gear ratio which is the ratio of an output rotation speed to an input rotation speed. Specifically, the transmission CVT is configured to change the gear ratio which is the ratio of the output rotation speed to the rotation speed of the crankshaft 15. Thus, the transmission CVT can change the ratio of the rotation speed of the crankshaft 15 to the speed of the engine-equipped vehicle 1. The transmission CVT of this embodiment is an automatic transmission. The transmission CVT of this embodiment is a continuously variable transmission.

FIG. 2 shows a primary pulley of the transmission CVT. The transmission CVT includes the primary pulley shown in FIG. 2, a secondary pulley (not shown), and a belt B. The belt B is wrapped on the primary pulley shown in FIG. 2 and the secondary pulley (not shown) of the transmission CVT. The primary pulley of the transmission CVT shown in FIG. 2 is connected to the crankshaft 15.

The transmission CVT changes the gear ratio in accordance with the rotation speed of the crankshaft 15. The transmission CVT has gear shifting characteristics which are characteristics of the gear ratio in accordance with the rotation speed. The gear shifting characteristics of the transmission CVT are designed so as to satisfy required fuel efficiency and performance of the engine-equipped vehicle 1.

The transmission CVT may not always have to be a continuously variable transmission, but it may be a multi-stage transmission having a gear, for example. The transmission CVT may be a manual transmission, for example.

The engine-equipped vehicle 1 has a clutch CL (see FIG. 1). The clutch CL is connected to the transmission CVT. The clutch CL is a centrifugal clutch. The clutch CL switches between a transmitting state and a blocking state. The transmitting state is a state where the clutch CL transmits rotational power of the crankshaft 15 to the wheel 3b which is the drive member. The blocking state is a state where the clutch CL blocks transmission of rotational power from the crankshaft 15 to the drive member. The clutch CL switches between the transmitting state and the blocking state in accordance with the rotation speed of the crankshaft 15. When the rotation speed of the crankshaft 15 is less than a predetermined threshold, the clutch CL is in the blocking state. When the rotation speed of the crankshaft 15 is more than a predetermined threshold, the clutch CL is in the transmitting state.

The transmission CVT and the clutch CL form a power transmission path PT between the crankshaft 15 and the wheel 3b serving as the drive member. The transmission CVT and the clutch CL forming the power transmission path PT are provided between the crankshaft 15 and the wheel 3b serving as the drive member. Power of the crankshaft 15 is transmitted to the wheel 3b through the power transmission path.

The engine 10 is provided with a throttle valve SV and a fuel injector device 18. The throttle valve SV regulates the amount of air to be supplied to the combustion chamber. The degree of opening of the throttle valve SV is regulated in accordance with an operation on the acceleration operator 8 (see FIG. 1). The fuel injector device 18 injects a fuel, to supply the fuel to the combustion chamber. The engine 10 is also provided with a spark plug 19.

The engine 10 is an internal combustion engine. The engine 10 is supplied with a fuel. The engine 10 performs a combustion operation in which the fuel is combusted, to output rotational power. The rotational power is outputted to the outside of the engine 10 via the crankshaft 15.

The fuel injector device 18 regulates rotational power to be outputted from the engine 10 by regulating the amount of fuel supply. The fuel injector device 18 is controlled by the control device 60. The fuel injector device 18 is controlled so as to supply an amount of fuel based on the amount of air supplied to the engine 10.

That is, the fuel injector device 18 regulates rotational power to be outputted from the engine 10 based on an instruction received by the acceleration operator 8. The fuel injector device 18 also functions as a rotational power regulating device that regulates rotational power to be outputted from the engine 10.

The engine 10 outputs rotational power via the crankshaft 15. Rotational power of the crankshaft 15 is transmitted to the wheel 3b via the transmission CVT and the clutch CL (see FIG. 1). The engine-equipped vehicle 1 is driven by the wheel 3b that receives rotational power outputted from the engine 10 via the crankshaft 15.

The engine 10 of this embodiment is a single-cylinder four-stroke engine. The engine 10 of this embodiment is an air-cooled type engine. The engine 10 may be a water-cooled type engine.

The engine 10 has, during four strokes, a high-load region in which a high load is put on rotation of the crankshaft 15 and a low-load region in which a load put on rotation of the crankshaft 15 is lower than that of the high-load region. The high-load region means a region, in one combustion cycle of the engine 10, where a load torque is higher than the average value of the load torque over one combustion cycle. The low-load region means a region, in one combustion cycle of the engine 10, where a load torque is lower than the average value of the load torque over one combustion cycle. From the viewpoint of the rotation angle of the crankshaft 15, the low-load region is wider than the high-load region. During forward rotation, the engine 10 repeats four strokes, namely, an intake stroke, a compression stroke, an expansion stroke, and an exhaust stroke. The compression stroke overlaps the high-load region.

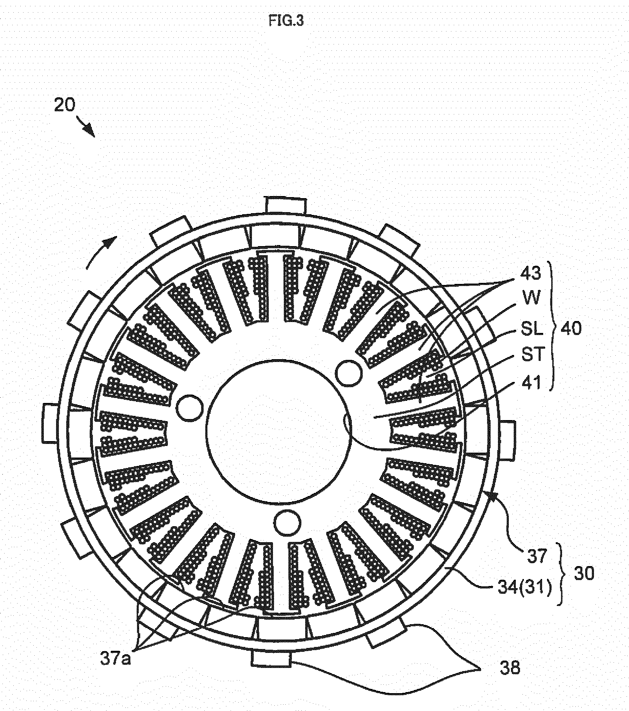

FIG. 3 is a cross-sectional view of the permanent magnet type AC generator 20 shown in FIG. 2, illustrating a cross-section perpendicular to its rotation axis line. The permanent magnet type AC generator 20 will be described with reference to FIG 2 and FIG. 3.

The permanent magnet type AC generator 20 is a three-phase AC generator of permanent magnet type.

The permanent magnet type AC generator 20 includes a rotor 30 and a stator 40. The permanent magnet type AC generator 20 of this embodiment is of radial gap type. The permanent magnet type AC generator 20 is of outer rotor type. That is, the rotor 30 is an outer rotor. The stator 40 is an inner stator.

The rotor 30 includes a rotor body part 31. The rotor body part 31 is made of, for example, a ferromagnetic material. The rotor body part 31 is in the shape of a cylinder with a bottom. The rotor body part 31 includes a cylindrical boss portion 32, a disk-shaped bottom wall portion 33, and a back yoke portion 34 having a cylindrical shape. The bottom wall portion 33 and the back yoke portion 34 are integrally formed. Here, it may also be acceptable that the bottom wall portion 33 and the back yoke portion 34 are formed as separate parts. The bottom wall portion 33 and the back yoke portion 34 are secured to the crankshaft 15 via the cylindrical boss portion 32. A winding to which a current is supplied is not provided in the rotor 30.

The rotor 30 includes a permanent magnet part 37. The rotor 30 includes a plurality of magnetic pole portions 37a. The plurality of magnetic pole portions 37a are formed by the permanent magnet part 37. The plurality of magnetic pole portions 37a are provided on an inner circumferential surface of the back yoke portion 34. In this embodiment, the permanent magnet part 37 includes a plurality of permanent magnets. The plurality of magnetic pole portions 37a are provided in the plurality of permanent magnets, respectively.

The permanent magnet part 37 may alternatively be configured as a single annular permanent magnet. In such a configuration, the single permanent magnet is magnetized such that the plurality of magnetic pole portions 37a appear side by side on the inner circumferential surface.

The plurality of magnetic pole portions 37a are provided such that N pole and S pole appear alternately with respect to a circumferential direction of the permanent magnet type AC generator 20. In this embodiment, the number of magnetic poles of the rotor 30 facing the stator 40 is twenty-four. The number of magnetic poles of the rotor 30 means the number of magnetic poles facing the stator 40. No magnetic material is arranged between the magnetic pole portions 37a and the stator 40.

The magnetic pole portions 37a are provided outside the stator 40 with respect to the radial direction of the permanent magnet type AC generator 20. The back yoke portion 34 is provided outside the magnetic pole portions 37a with respect to the radial direction. The number of magnetic pole portions 37a included in the permanent magnet type AC generator 20 is more than the number of teeth 43.

The rotor 30 may be of interior permanent magnet type (IPM type) in which the magnetic pole portions 37a are embedded in a magnetic element, but it preferably is of surface permanent magnet type (SPM type) in which the magnetic pole portions 37a are exposed from a magnetic element as illustrated in this embodiment.

A cooling fan F is provided to the bottom wall portion 33 of the rotor 30.

The stator 40 includes a stator core ST and a plurality of stator windings W. The stator core ST includes a plurality of teeth 43 arranged at intervals with respect to the circumferential direction. The plurality of teeth 43 integrally extend from the stator core ST toward radially outside. In this embodiment, eighteen teeth 43 in total are arranged at Intervals with respect to the circumferential direction. In other words, the stator core ST has eighteen slots SL in total that are arranged at intervals with respect to the circumferential direction. The teeth 43 are arranged at equal intervals with respect to the circumferential direction.

The number of magnetic pole portions 37a included in the rotor 30 is more than the number of teeth 43. The number of magnetic pole portions 37a is equal to 4/3 of the number of slots.

The stator winding W is wound around each of the teeth 43. That is, the multi-phase stator windings W are arranged through the slots SL. In the state shown in FIG. 3, the stator windings W are in the slots SL. Each of the multi-phase stator windings W belongs to any of U-phase, V-phase, and W-phase. The stator windings W are arranged in the order of U-phase, V-phase, and W-phase, for example. A manner in which the stator winding W is wound may be, though not particularly limited, either concentrated winding or distributed winding, and it preferably is concentrated winding.

The rotor 30 includes, on its outer surface, a plurality of detection object parts 38 for detection of the rotation position of the rotor 30. Magnetic effects are used to detect the plurality of detection object parts 38. The plurality of detection object parts 38 arranged at intervals with respect to the circumferential direction are provided on the outer surface of the rotor 30. The detection object parts 38 are made of a ferromagnetic material.

A rotor position detection device 50 is a device that detects the position of the rotor 30. The rotor position detection device 50 is provided at a position allowed to face the plurality of detection object parts 38.

The permanent magnet type AC generator 20 is connected to the crankshaft 15 of the engine 10. More specifically, the permanent magnet type AC generator 20 is connected to the crankshaft 15 such that the rotor 30 is rotated with its speed ratio fixed relative to the crankshaft 15.

The rotor 30 is connected to the crankshaft 15 at a location outside the power transmission path PT between the crankshaft 15 and the wheel 3b serving as the drive member, that is, at a location outside the power transmission path PT including the transmission CVT and the clutch CL.

In this embodiment, the rotor 30 is attached to the crankshaft 15 without interposition of any transmission mechanism (for example, a belt, a chain, a gear, a speed reducer, or a speed increaser). The rotor 30 is rotated with a speed ratio of 1:1 relative to the crankshaft 15. The permanent magnet type AC generator 20 is configured to cause forward rotation of the rotor 30 by forward rotation of the engine 10.

The permanent magnet type AC generator 20 may be attached to the crankshaft 15 with interposition of a transmission mechanism. The permanent magnet type AC generator 20, however, is connected to the crankshaft 15 with interposition of neither a variable ratio transmission nor a clutch. In other words, the permanent magnet type AC generator 20 is connected to the crankshaft 15 without interposition of a device whose input/output speed ratio is variable.

In the present teaching, it is preferable that the rotation axis line of the permanent magnet type AC generator 20 is substantially coincident with the rotation axis line of the crankshaft 15. It is also preferable that the permanent magnet type AC generator 20 is attached to the crankshaft 15 without interposition of any transmission mechanism, as illustrated in this embodiment.

In the combustion operation of the engine 10, the permanent magnet type AC generator 20 is driven by the engine 10, to generate electric power. Thus, in at least part of a period following the start of the engine 10, the permanent magnet type AC generator 20 is driven in forward rotation by the crankshaft 15, to function as a generator. That is, in a case where the permanent magnet type AC generator 20 functions as a generator, it is not always necessary that the permanent magnet type AC generator 20 functions as a generator all the time after the engine 10 starts combustion.

At a time of engine start, the permanent magnet type AC generator 20 drives the crankshaft 15 in forward rotation, to start the engine 10.

The permanent magnet type AC generator 20 of this embodiment has the magnetic pole portions 37a, the number of which is more than the number of teeth 43.

The permanent magnet type AC generator 20, therefore, has a higher angular velocity as compared with a permanent magnet type AC generator in which the number of magnetic pole portions is less than the number of teeth. The angular velocity contributes to the impedance of windings.

Thus, in outline, the impedance of windings is given by the following expression.

$$(R^2 + \omega^2 L^2)^{1/2}$$

where R represents the DC resistance, $\omega$ represents the angular velocity in electrical angle, and L represents the inductance.

The angular velocity $\omega$ in electrical angle is given by the following expression.

$$\omega = (P/2) \times (N/60) \times 2\pi$$

where P represents the number of magnetic poles, and N represents the rotation speed [rpm].

Since the number of magnetic pole portions 37a included in the permanent magnet type AC generator 20 is more than the number of teeth 43, a higher angular velocity $\omega$ Is obtained as compared with a permanent magnet type AC generator in which the number of magnetic pole portions is less than the number of teeth. Thus, the impedance during rotation is high. As the rotation speed N increases, the angular velocity $\omega$ becomes higher so that the impedance becomes higher.

Accordingly, the permanent magnet type AC generator 20 can, in its rotation region where it functions as a generator, obtain a high impedance and suppress a power generation current.

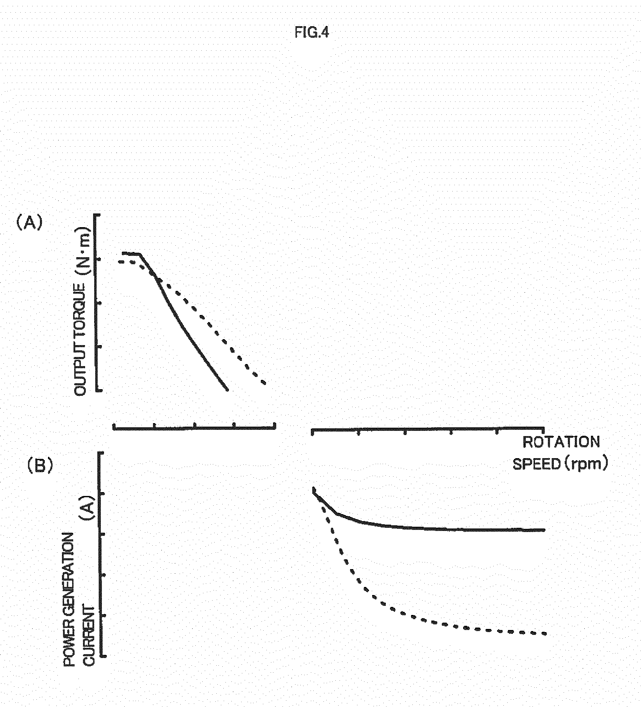

FIG. 4(A) is an explanatory diagram schematically showing driving characteristics of the permanent magnet type AC generator 20. FIG. 4(B) is an explanatory diagram schematically showing power generation characteristics.

In the diagrams, the horizontal axis represents the rotation speed of the crankshaft 15. It should be noted that the rotation speed per scale division on the horizontal axis differs between FIG. 4(A) showing the driving characteristics and FIG. 4(B) showing the power generation characteristics. The rotation speed per scale division in the power generation characteristics diagram is more than the rotation speed per scale division in the driving characteristics diagram. The positive vertical axis represents an output torque, and the negative vertical axis represents a power generation current. The solid lines show characteristics of the permanent magnet type AC generator 20 according to an example. The broken lines show characteristics of a permanent magnet type AC generator according to a comparative example. In the permanent magnet type AC generator according to the comparative example, the number of magnetic pole portions is less than the number of teeth.

In FIG. 4(A) and (B), the permanent magnet type AC generator 20 of this embodiment is designed with priority given to power generation current suppression out of torque improvement and power generation current suppression. In the permanent magnet type AC generator 20 of this embodiment, the power generation current suppression can be prioritized by, for example, spacing distal end portions of the adjacent teeth 43 from each other at a relatively narrow interval, the distal end portions facing the rotor 30. The permanent magnet type AC generator 20 of this embodiment (solid line) can output a torque comparable to the permanent magnet type AC generator of the comparative example (broken line) can at a time of driving the crankshaft 15 (FIG. 4(A)), and can suppress a power generation current to a greater extent than the permanent magnet type AC generator of the comparative example (broken line) can at a time of high-speed rotation (FIG. 4(B)).

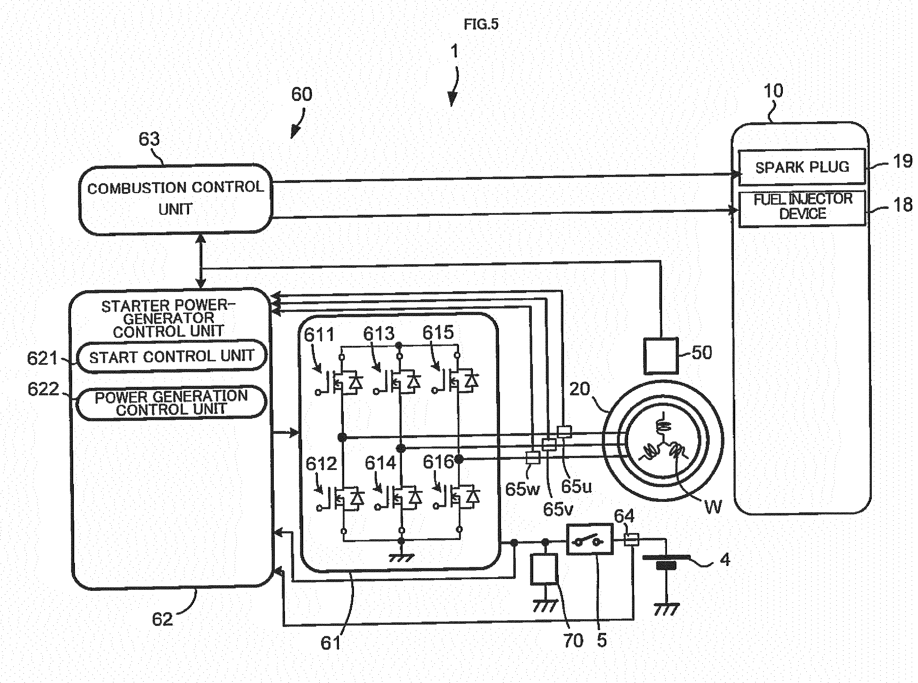

FIG. 5 is a block diagram outlining an electrical configuration of the engine-equipped vehicle 1 shown in FIG. 1.

The engine-equipped vehicle 1 includes an inverter 61. The control device 60 controls each part of the engine-equipped vehicle 1 including the inverter 61.

The permanent magnet type AC generator 20 and the battery 4 are connected to the inverter 61. The battery 4 receives a current from the permanent magnet type AC generator 20. An electric power consuming apparatus 70 is also connected to the inverter 61 and the battery 4. The electric power consuming apparatus 70 consumes electric power when operating. The electric power consuming apparatus 70 includes the spark plug 19 and the fuel injector device 18 provided in the engine 10. The electric power consuming apparatus 70 also includes the headlight 7, a fuel pump (not shown), and a display device.

The battery 4 is connected to the inverter 61 and the electric power consuming apparatus 70 via the main switch 5.

A current sensor 64 is provided in a line connecting the battery 4 to the inverter 61. The current sensor 64 detects a current flowing to the battery 4. The current sensor 64 is disposed in a portion of the line connecting the battery 4 to the inverter 61, the portion being located between the battery 4 and a branch point leading to the electric power consuming apparatus 70.

The inverter 61 includes a plurality of switching parts 611 to 616. In this embodiment, the inverter 61 includes six switching parts 611 to 616.

The switching parts 611 to 616 constitute a three-phase bridge inverter.

The plurality of switching parts 611 to 616 are connected to the respective phases of the multi-phase stator windings W.

More specifically, among the plurality of switching parts 611 to 616, every two switching parts that are connected in series constitute a half bridge. The half bridge corresponding to each phase is connected in parallel with the battery 4. Ones of the switching parts 611 to 616 constituting the half bridge of each phase are connected to the corresponding phase of the multi-phase stator windings W. Among the plurality of switching parts 611 to 616, the switching parts 612, 614, 616 connected to a ground line are referred to as lower-arm switching parts. The switching parts 611, 613, 615 connected to a power source line are referred to as upper-arm switching parts.

The switching parts 611 to 616 selectively allow or block the passing of a current between the multi-phase stator windings W and the battery 4.

In detail, switching between allowing and blocking the passing of a current between each of the stator windings W and the battery 4 is implemented by on/off-operation of the switching parts 611 to 616. By switching on/off the switching parts 611 to 616 one after another, a voltage control and a rectification of a three-phase AC outputted from the permanent magnet type AC generator 20 are performed.

Each of the switching parts 611 to 616 has a switching element. The switching element is, for example, a transistor and In more detail, an FET (Field Effect Transistor).

Current sensors 65u, 65v, 65w are provided in lines connecting the inverter 61 to the stator windings W. The current sensors 65u, 65v, 65w detect currents of three-phase stator windings W of the permanent magnet type AC generator 20, respectively. The current sensors 65u, 65v, 65w are connected to the control device 60.

The fuel injector device 18, the spark plug 19, and the battery 4 are connected to the control device 60.

The control device 60 includes a starter power-generator control unit 62 and a combustion control unit 63.

The starter power-generator control unit 62 controls on/off-operation of each of the switching parts 611 to 616, to control the operation of the permanent magnet type AC generator 20. The starter power-generator control unit 62 includes a start control unit 621 and a power generation control unit 622.

The combustion control unit 63 controls the spark plug 19 and the fuel injector device 18, to control the combustion operation of the engine 10. The combustion control unit 63 controls the spark plug 19 and the fuel injector device 18, to control rotational power of the engine 10.

The control device 60 is composed of a computer including a central processing unit (not shown) and a storage device (not shown). The central processing unit executes arithmetic processing based on a control program. The storage device stores data relating to programs and arithmetic operations.

The combustion control unit 63 and the starter power-generator control unit 62 including the start control unit 621 and the power generation control unit 622 are implemented by a computer (not shown) and a control program executable by the computer. Thus, below-described operations performed respectively by the start control unit 621, the power generation control unit 622, the starter power-generator control unit 62, and the combustion control unit 63 can be considered as operations performed by the control device 60. The starter power-generator control unit 62 and the combustion control unit 63 may be, for example, either configured as separate devices placed at a distance from each other, or integrated as a single device.

The starter power-generator control unit 62 of the control device 60 detects the state of charge of the battery 4. The starter power-generator control unit 62 detects the state of charge of the battery 4 by detecting the voltage and current of the battery 4.

The main switch 5 supplies electric power to the control device 60 in accordance with an operation performed thereon.

The combustion control unit 63 and the starter power-generator control unit 62 of the control device 60 control the engine 10 and the permanent magnet type AC generator 20. The starter power-generator control unit 62 controls the inverter 61.

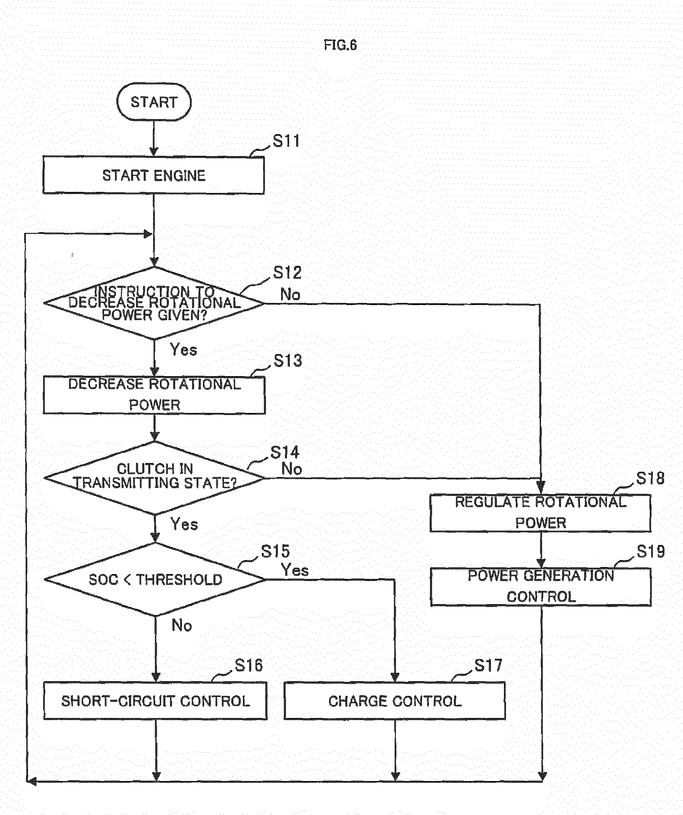

FIG. 6 is a flowchart of operations of the engine-equipped vehicle 1.

Operations of the engine-equipped vehicle 1 will be described with reference to FIG. 5 and FIG. 6.

Operations of the engine-equipped vehicle 1 are controlled by the control device 60.

The control device 60 starts the engine 10 (S11). To be specific, the start control unit 621 of the starter power-generator control unit 62 directs the permanent magnet type AC generator 20 to drive the crankshaft 15. The start control unit 621 performs on/off-operation of the plurality of switching parts 611 to 616 included in the inverter 61 such that a current for driving the rotor 30 in forward rotation is supplied to the multi-phase stator windings W. The permanent magnet type AC generator 20 drives the crankshaft 15 accordingly. Moreover, in step S11, the combustion control unit 63 of the control device 60 directs the fuel injector device 18 to supply a fuel. The combustion control unit 63 directs the spark plug 19 to cause ignition.

The start control unit 621 determines whether or not start of the engine 10 is completed based on, for example, the rotation speed of the crankshaft 15. The start control unit 621 acquires the rotation speed of the crankshaft 15 from, for example, a detection result of the rotor position detection device 50.

Subsequently, the control device 60 determines whether or not an instruction to decrease rotational power of the engine 10 is given by the acceleration operator 8 while the engine-equipped vehicle 1 is in motion (S12).

If an instruction to decrease rotational power of the engine 10 is not given (S12: No), the control device 60 regulates rotational power of the engine 10 (S18) and performs a power generation control (S19). Examples of the case where an instruction to decrease rotational power of the engine 10 is not given include a case where the engine-equipped vehicle 1 is in motion at a constant speed, a case where the engine-equipped vehicle 1 is accelerating, and a case where the engine-equipped vehicle 1 is idling.

In regulating rotational power of the engine 10 in step S18, the control device 60 directs the fuel injector device 18 to regulate the amount of fuel in accordance with the amount of air supplied to the engine 10. The amount of air supplied to the combustion chamber of the engine 10 is regulated in accordance with the degree of opening of the throttle valve SV. The combustion control unit 63 of the control device 60 directs the fuel injector device 18 to regulate the amount of fuel, based on an operation performed on the acceleration operator 8. For example, if an instruction to increase rotational power of the engine 10 is given by the acceleration operator 8 in order to accelerate the engine-equipped vehicle 1, the combustion control unit 63 directs the fuel injector device 18 to increase the amount of fuel. The combustion control unit 63 increases rotational power of the engine 10 accordingly.

In the power generation control of step S19, the power generation control unit 622 of the starter power-generator control unit 62 controls the switching parts 611 to 616 such that a current outputted from the permanent magnet type AC generator 20 is supplied to the electric power consuming apparatus 70. If the state of charge of the battery 4 is not full charge, the current outputted from the permanent magnet type AC generator 20 is supplied to the battery 4, too.

If an instruction to decrease rotational power of the engine 10 is given in step S12 mentioned above (S12: Yes), the control device 60 performs a control for decreasing rotational power of the engine 10 (S13). Specifically, in response to the instruction to decrease rotational power of the engine 10, the amount of air supplied from the throttle valve SV to the engine 10 decreases. As a result, the rotational power of the engine 10 decreases. In addition, the combustion control unit 63 directs the fuel injector device 18 to decrease the amount of fuel. In this manner, the combustion control unit 63 decreases the rotational power of the engine 10. The combustion control unit 63 decreases the rotational power of the engine 10 without stopping the combustion operation of the engine 10.

Then, the control device 60 determines whether or not the clutch CL is in the transmitting state (S14). The control device 60 uses the rotation speed of the engine 10 to determine the state of the clutch CL. If the rotation speed of the engine 10 is lower than an engagement speed which serves as the predetermined threshold, the control device 60 determines that it is in the blocking state.

If an instruction to decrease rotational power of the engine 10 is given by the acceleration operator 8 (S12: Yes) and the clutch CL is in the transmitting state (S14: Yes), the control device 60 switches between the short-circuit control (S16) and the charge control (S17) in accordance with the state of charge of the battery 4. The control device 60 controls the switching parts 611 to 616 included in the inverter 61 under the control selected by the switching. More specifically, the control device 60 determines whether or not the state of charge of the battery 4 is lower than a predefined threshold level (S15). In the determination of step S15, the control device 60 adopts the voltage of the battery 4 as an index of the state of charge of the battery 4. The control device 60 determines whether or not the voltage of the battery 4 is lower than a predefined threshold level.

If the state of charge of the battery 4 is equal to or higher than the threshold level (S15: No), the control device 60 performs a short-circuit control process (S16).

For the winding short-circuit in step S16, the control device 60 short-circuits the stator windings W of the permanent magnet type AC generator 20. Specifically, the power generation control unit 622 of the starter power-generator control unit 62 controls the switching parts 611 to 616 so as to short-circuit the stator windings W. When the stator windings W are short-circuited, a current flowing in the stator windings W hinders rotation of the permanent magnet type AC generator 20. This produces a braking force in the permanent magnet type AC generator 20. That is, the control device 60 directs the switching parts 611 to 616 to bring the stator windings W of the permanent magnet type AC generator 20 into a short-circuit state such that the permanent magnet type AC generator applies a braking force to forward rotation of the crankshaft 15. At this time, no current flows to the battery 4 from the permanent magnet type AC generator 20.

The number of stator windings W short-circuited by the power generation control unit 622 in step S16 is according to the instruction to decrease rotational power of the engine 10. To be specific, the power generation control unit 622 determines the degree of decrease instructed by the instruction to decrease rotational power of the engine 10, based on the amount of operation on the acceleration operator 8.

If the degree of decrease of the rotational power in the instruction is more than a predetermined threshold, the power generation control unit 622 short-circuits the stator windings W belonging to all phases of the permanent magnet type AC generator 20. For example, if the acceleration operator 8 is operated to the accelerator pedal position zero, the power generation control unit 622 short-circuits the stator windings W belonging to all of three phases. In other words, the power generation control unit 622 short-circuits all the stator windings W.

The power generation control unit 622 brings the switching parts 612, 614, 616 connected to the ground line into ON state. Accordingly, the target stator windings W are short-circuited.

If the degree of decrease of the rotational power in the instruction is less than a predetermined threshold, the power generation control unit 622 short-circuits the stator windings W belonging to part of the phases of the permanent magnet type AC generator 20. For example, the power generation control unit 622 short-circuits the stator windings W belonging to two out of three phases.

The power generation control unit 622 brings switching parts connected to short-circuit target stator windings W among the switching parts 612, 614, 616 connected to the ground line into ON state. Accordingly, the target stator windings W are short-circuited. For example, when the power generation control unit 622 brings all the switching parts 612, 614, 616 connected to the ground line into ON state, all the stator windings W are short-circuited. When the power generation control unit 622 brings part of the switching parts 612, 614, 616 into ON state, part of the stator windings W is short-circuited.

The power generation control unit 622 of this embodiment controls the magnitude of a braking force against rotation of the crankshaft 15, by controlling the number of phases of short-circuited stator windings W.

The greater the number of phases of short-circuited stator windings W is, the larger the braking force is. Short-circuiting all the stator windings W provides a maximum braking force. The power generation control unit 622 controls the magnitude of a braking force to be exerted by the permanent magnet type AC generator 20 in accordance with the degree of the instruction to decrease rotational power of the engine 10.

If the state of charge of the battery 4 is less than the threshold level (S15: Yes), the control device 60 performs the charge control (S17) instead of the short-circuit control. In this case, a current outputted from the permanent magnet type AC generator 20 is supplied to the battery 4. The battery 4 is charged. The current outputted from the permanent magnet type AC generator 20 is supplied to the electric power consuming apparatus 70, too.

For example, in a case where charging under the power generation control in step S19 mentioned above can provide merely an insufficient state of charge of the battery 4; the battery 4 is charged even while an instruction to decrease rotational power of the engine 10 is given.

A current is supplied from the permanent magnet type AC generator 20 to the battery 4, so that the battery 4 is charged. The state of charge of the battery 4 increases. If the state of charge of the battery 4 becomes equal to or higher than the threshold (S15: No), the power generation control unit 622 switches the control of the switching parts 611 to 616 from the charge control (S17) to the winding short-circuit control (S16). In the winding short-circuit control, the stator windings W of the permanent magnet type AC generator 20 are short-circuited, so that the electric power consuming apparatus 70 operates while consuming electric power charged in the battery 4. This brings the battery 4 into a discharge state. Electric power stored in the battery 4 decreases.

If the state of charge of the battery 4 falls below the threshold level (S15: Yes), the power generation control unit 622 switches the control of the switching parts 611 to 616 from the winding short-circuit control (S16) to the charge control (S17).

In this manner, the power generation control unit 622 switches between the control of directing the plurality of switching parts 611 to 616 included in the inverter 61 to bring the windings of the permanent magnet type AC generator 20 into the short-circuit state (S16) and the control of directing the switching parts 611 to 616 to supply a current to the battery 4, the current being produced in electric power generation by the permanent magnet type AC generator 20 (S17). The power generation control unit 622 repeatedly switches the control in accordance with the state of charge of the battery 4.

The power generation control unit 622 also controls the ratio between a period in which the control of directing the switching parts 611 to 616 to bring the windings of the permanent magnet type AC generator 20 into the short-circuit state (S16) is applied and a period in which the control of directing the switching parts 611 to 616 to supply the battery 4 with a current, the current being produced in electric power generation by the permanent magnet type AC generator 20 (S17), is applied. The power generation control unit 622 controls this ratio so as to allow a current larger than a current consumed by the electric power consuming apparatus 70 to be outputted from the inverter 61 due to electric power generation by the permanent magnet type AC generator 20.

In the alternate repeat of the winding short-circuit control (S16) and the charge control (S17), once the battery 4 reaches a full charge state under the charge control (S17), a current larger than a current consumed by the electric power consuming apparatus 70 can no longer be outputted from the inverter 61 in electric power generation by the permanent magnet type AC generator 20. The period of winding short-circuit control (S16), in which the battery 4 discharges, is provided in such a manner that the battery 4 does not reach the full charge state when charged under the charge control (S17). The power generation control unit 622 controls the ratio between the period in which the winding short-circuit control (S16) is applied and the period in which the charge control (S17) is applied to such a ratio that the battery 4 does not reach the full charge state when charged under the charge control (S17).

The power generation control unit 622 sets the threshold level of the state of charge of the battery 4, which is used for determination in step S15 mentioned above, to a value lower than the full state-of-charge. In this manner, the power generation control unit 622 controls the ratio between the period in which the winding short-circuit control (S16) is applied and the period in which the charge control (S17) is applied to such a ratio that the battery 4 does not reach the full charge state when charged under the charge control (S17).

The power generation control unit 622 also controls a switching cycle between the control of bringing the stator windings W into the short-circuit state and the control of supplying the battery 4 with a current produced in electric power generation by the permanent magnet type AC generator 20. The switching cycle can be controlled by, for example, setting a state-of-charge threshold and a threshold range. The power generation control unit 622 controls the switching cycle so as to make the switching cycle short enough to keep a rider from recognizing a change of the braking force caused by switching. Uncomfortableness felt by the rider in relation to a change of the braking force caused by switching the control can be suppressed. The power generation control unit 622 controls the switching cycle to be equal to or less than 100 mS, for example. The power generation control unit 622 controls the switching cycle by, for example, restricting a time length over which at least one of the winding short-circuit control (S16) or the charge control (S17) continues.

As the control for making the switching cycle short enough to keep the rider from recognizing a change of the braking force, the power generation control unit 622 can control the switching cycle so as to make the switching cycle shorter than a rotation cycle of the wheel 3b, for example.

In the control performed by the control device 60, if the instruction to decrease rotational power of the engine 10 is canceled (S12: No), the control device 60 performs the power generation control (S19). That is, if the instruction to decrease rotational power of the engine 10 is canceled, the control device 60 cancels the short-circuit state of the stator windings W.

To cancel the short-circuit state, the power generation control unit 622 acquires the magnitude of a current flowing in the stator winding W of each phase. The current flowing in the stator winding W of each phase is acquired based on, for example, detection results of the current sensors 65u, 65v, 65w. In a period in which a current flowing in a stator winding W of one phase is less than a predefined threshold, the power generation control unit 622 turns off the switching element corresponding to the stator winding W of the one phase, to cancel the short-circuit state of the one phase. More specifically, in a period in which a current flowing in the U-phase stator winding W out of the three-phase stator windings W is less than a threshold, the power generation control unit 622 brings the switching part 612 which corresponds to the U-phase stator winding W into OFF state. In a period in which a current flowing in the V-phase stator winding W is less than a predefined threshold, the power generation control unit 622 brings the switching part 614 which corresponds to the V-phase stator winding W into OFF state. In a period in which a current flowing in the W-phase stator winding W is less than a predefined threshold, the power generation control unit 622 brings the switching part 616 which corresponds to the W-phase stator winding W into OFF state. As the threshold, for example, a value smaller than the ampacity of the battery 4 is set.

In a period in which a current flowing in one phase of the stator windings W is small, the corresponding switching element is turned off, so that supply of a large inrush current to the battery 4 can be suppressed. This provides protection to the battery 4 at a time of canceling the short-circuit state.

The engine-equipped vehicle 1 of this embodiment is driven by the wheel 3b receiving rotational power outputted from the engine 10. The magnitude of the rotational power is controlled by an operation performed on the acceleration operator 8. The rotational power is transmitted from the engine 10 to the wheel 3b via the crankshaft 15 and the transmission CVT. The rotation speed of the crankshaft 15 is gear-shifted by the transmission CVT. The transmission CVT changes the gear ratio in accordance with the rotation speed of the crankshaft 15. That is, the transmission CVT has gear shifting characteristics which are characteristics of the gear ratio In accordance with the rotation speed.

In general, adoption of a continuously variable transmission in which a low gear ratio is set as gear shifting characteristics of the gear ratio in accordance with the rotation speed can reduce the rotation speed of the engine 10. Fuel consumption in the engine 10 can be suppressed accordingly.

Use of a continuously variable transmission in which a low gear ratio is set, however, is likely to make engine braking less effective when an instruction to decrease engine rotational power is given. This may lead to insufficient responsiveness of the speed of the engine-equipped vehicle 1 to the instruction to decelerate.

In the engine-equipped vehicle 1 of this embodiment, if an instruction to decrease rotational power of the engine 10 is given by an operation performed on the acceleration operator 8, the stator windings W of the permanent magnet type AC generator 20 connected to the engine 10 are brought into the short-circuit state. When the permanent magnet type AC generator 20 is in the short-circuit state, a braking force is applied to rotation of the crankshaft 15 of the engine 10. Accordingly, engine braking increases due to a decrease of the rotational power in response to the instruction to decrease rotational power of the engine 10 which is given by the acceleration operator 8.

Therefore, even though a transmission CVT in which a low gear ratio is set is adopted in order to suppress fuel consumption, a reduction of engine braking can be suppressed when an instruction to decrease rotational power of the engine 10 is given by the acceleration operator 8. Here, the control of bringing the stator windings W of the permanent magnet type AC generator 20 into the short-circuit state can be performed in combination with a transmission CVT in which a high gear ratio is set.

Accordingly, the engine-equipped vehicle 1 of this embodiment gives high design freedom in terms of fuel consumption suppression. High design freedom is also given in terms of a brake control at a time of deceleration.

When the stator winding W is in the short-circuit state, a braking force occurs due to an induced voltage generated in the stator winding W. The higher the rotation speed of the crankshaft 15 is, the larger the induced voltage is. The induced voltage is proportional to the rotation speed of the crankshaft 15.

In this embodiment, the permanent magnet type AC generator 20 is connected to the crankshaft 15 without interposition of a device whose input/output speed ratio is variable.

The power generation control unit 622, therefore, performs the control of short-circuiting the stator windings W, so that the permanent magnet type AC generator 20 outputs a braking force which becomes larger as the rotation speed of the crankshaft 15 increases. Specifically, the power generation control unit 622 directs the permanent magnet type AC generator 20 to output a braking force which is proportional to the rotation speed of the crankshaft 15. Thus, enhancement of the braking force suitable for a traveling condition of the engine-equipped vehicle 1 is obtained.

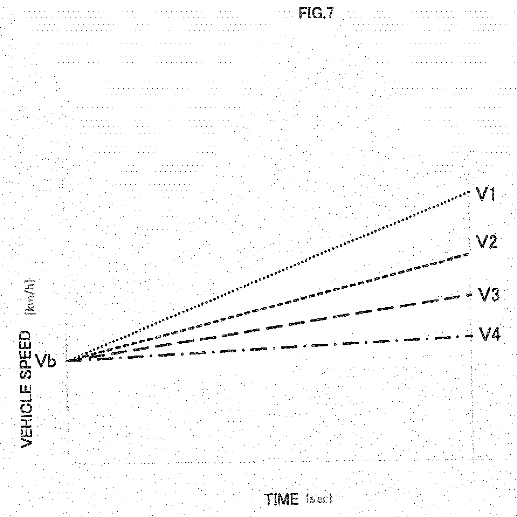

FIG. 7 is a graph showing speed changes of the engine-equipped vehicle when the engine-equipped vehicle descends a grade.

In the graph of FIG. 7, the horizontal axis represents time. The vertical axis represents the speed of the engine-equipped vehicle. The graph of FIG. 7 shows speed changes in cases where the engine-equipped vehicle starting from the same initial speed Vb descends a grade while respective controls are performed. The graph of FIG. 7 shows a braking force under each control. The gentler the slope of a graph line is, the larger the braking force is.

A broken line V1 of the graph Indicates a speed while the permanent magnet type AC generator 20 generates electric power. The broken line V1 indicates a speed in a case where the battery 4 is full charge and a current produced in electric power generation by the permanent magnet type AC generator 20 is not supplied to the battery 4. In this case, the current produced in electric power generation by the permanent magnet type AC generator 20 is supplied to the electric power consuming apparatus 70 alone.

A broken line V2 indicates a speed while the stator windings W of the permanent magnet type AC generator 20 are short-circuited.

In an example shown in FIG. 7, the speed Increases as time elapses under any control. The larger the braking force is, the smaller the increment of the speed is.

As indicated by the broken line V2, a braking force exerted when the stator windings W of the permanent magnet type AC generator 20 are short-circuited is larger than a braking force exerted when the battery 4 is full charge and the permanent magnet type AC generator 20 generates electric power.

Short-circuiting the stator windings W of the permanent magnet type AC generator 20 allows a large braking force of the permanent magnet type AC generator 20 to be applied to rotation of the crankshaft 15. That is, the braking force of the engine 10 is large from the viewpoint of the wheel 3b (see FIG. 1).

A broken line V4 of the graph Indicates a speed while the permanent magnet type AC generator 20 generates electric power. The broken line V4 indicates a speed in a case where the battery 4 Is not full charge. The broken line V4 indicates a speed in a case where a current produced in electric power generation by the permanent magnet type AC generator 20 is supplied to the battery 4 and the electric power consuming apparatus 70. This current supply from the permanent magnet type AC generator 20 is larger than current supply in a case where the current is supplied to the electric power consuming apparatus 70 alone. Thus, a braking force exerted when the permanent magnet type AC generator 20 supplies a current to the battery 4 is larger than the braking force exerted when the battery 4 is full charge. The braking force exerted when the permanent magnet type AC generator 20 supplies a current to the battery 4 is also larger than the braking force exerted when the stator windings W of the permanent magnet type AC generator 20 are short-circuited.

In the graph of FIG. 7, the speed represents a state of acceleration in descending a grade. The speeds indicated by the broken lines V1 to V4 in the graph are decelerated as compared with when, for example, no current flows in the stator windings W of the permanent magnet type AC generator 20. The relationship among the broken lines V1 to V4 in the graph of FIG. 7 shows the relationship among decelerations of the engine-equipped vehicle 1.

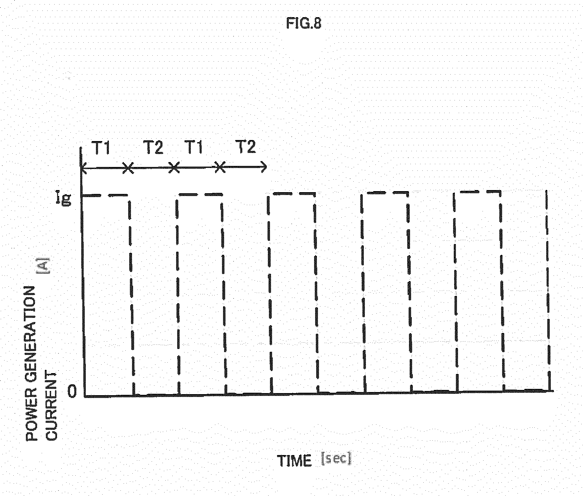

FIG. 8 is a graph showing a change of a current outputted from the permanent magnet type AC generator 20.

In the graph, the horizontal axis represents time. The vertical axis represents a current. A broken line of the graph indicates a current that the permanent magnet type AC generator 20 outputs via the inverter 61. The broken line of the graph indicates a current that the permanent magnet type AC generator 20 supplies to the battery 4 and the electric power consuming apparatus 70 via the inverter 61. This current is a current that is supplied if an instruction to decrease rotational power of the engine 10 is given by the acceleration operator 8 (S12: Yes) and the clutch CL is in the transmitting state (S14: Yes).

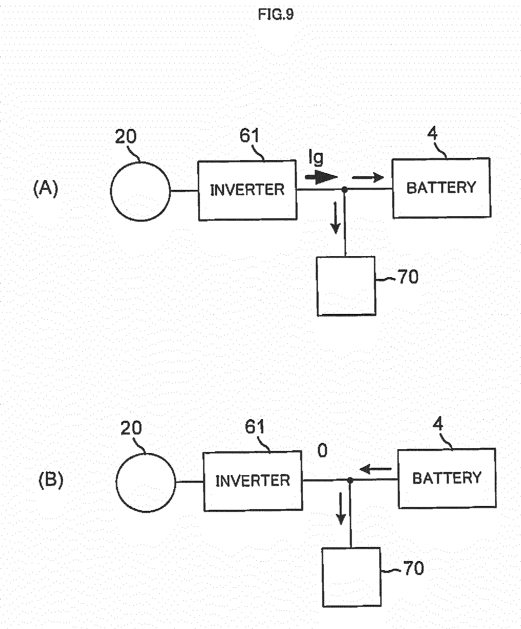

FIG. 9(A) is a block diagram outlining a current that flows in the inverter 61, the battery 4, and the electric power consuming apparatus 70 in a charge control period, and FIG. 9(B) is a block diagram outlining a current that flows in the inverter 61, the battery 4, and the electric power consuming apparatus 70 in a winding short-circuit control period.

As shown in FIG. 8, in a period T1 of the charge control (S17 of FIG. 6), the permanent magnet type AC generator 20 outputs a current Ig via the Inverter 61. The charge control is a control of supplying a current produced in electric power generation to the battery 4. The current Ig is larger than a current consumed by the electric power consuming apparatus 70. As shown in FIG. 9(A), the current Ig is supplied to both the battery 4 and the electric power consuming apparatus 70. The battery 4 is charged, so that the state of charge of the battery 4 increases.

After the period T1, the control is switched to the winding short-circuit control (S16 of FIG. 6) in accordance with the state of charge of the battery 4. As shown in FIG. 8, in a winding short-circuit control period T2, a current that the permanent magnet type AC generator 20 outputs via the inverter 61 is zero. In this case, as shown in FIG. 9(B), the electric power consuming apparatus 70 operates while consuming electric power charged in the battery 4. Thus, the battery 4 is in the discharge state. The state of charge of the battery 4 decreases.

After the winding short-circuit control period T2, the control is switched again to the charge control (S17 of FIG 6) in accordance with the state of charge of the battery 4. During the winding short-circuit control period T2, the battery 4 is in the discharge state. When the control is switched to the charge control after the period T2, therefore, the state of the battery 4 is not the full charge state. This allows a current Ig outputted from the permanent magnet type AC generator 20 to be supplied to both the battery 4 and the electric power consuming apparatus 70 in a charge control period T1 subsequent to the period T2. Thus, in the charge control period T1, the permanent magnet type AC generator 20 outputs a current larger than the current supplied to the electric power consuming apparatus 70 alone in the winding short-circuit control.

Providing the winding short-circuit control period T2 enables a current larger than the current supplied to the electric power consuming apparatus 70 alone to be outputted from the permanent magnet type AC generator 20 in the charge control period T1. The ratio between the winding short-circuit control period T2 and the charge control period T1 can be adjusted by setting a threshold of the state of charge of the battery 4 which is used for the control switching determination in step S15 of FIG. 6. In this embodiment, the ratio between the winding short-circuit control period T2 and the charge control period T1 is set so as to allow the permanent magnet type AC generator 20 to output a current larger than a current consumed by the electric power consuming apparatus 70 under the charge control. In more detail, the threshold of the state of charge is set so as to attain, as the above-mentioned ratio, a ratio that allows the permanent magnet type AC generator 20 to output a current larger than a current consumed by the electric power consuming apparatus 70.

Accordingly, during the charge control period T1, the permanent magnet type AC generator 20 outputs a larger current as compared with when a current is supplied to the electric power consuming apparatus 70 alone.

In the charge control period T1 shown in FIG. 8, the permanent magnet type AC generator 20 applies a braking force as indicated by V4 in the graph of FIG. 7 to rotation of the crankshaft 15. In the winding short-circuit control period T2, the permanent magnet type AC generator 20 applies a braking force as indicated by V2 in the graph of FIG. 7 to rotation of the crankshaft 15.

The broken line V3 shown in the graph of FIG. 7 indicates an exemplary speed in a case where the charge control and the winding short-circuit control are repeatedly switched from one to the other as illustrated in FIG. 8.

The control of directing the permanent magnet type AC generator 20 to supply a current to the battery 4 is the charge control. The charge control is the high braking force control. The slope of the broken line V4 in the graph of FIG. 7 represents a deceleration of the engine-equipped vehicle 1 under the high braking force control.

The control of short-circuiting the stator windings W of the permanent magnet type AC generator 20 is the winding short-circuit control. The winding short-circuit control is the low braking force control. The slope of the broken line V2 in the graph of FIG. 7 represents a deceleration of the engine-equipped vehicle 1 under the low braking force control.

If the brake control is switched from the low braking force control to the high braking force control before the deceleration of the engine-equipped vehicle 1 reaches the deceleration obtained under the low braking force control (V2), the deceleration of the engine-equipped vehicle 1 increases toward the deceleration obtained under the high braking force control (V4) instead of approaching the deceleration obtained under the low braking force control (V2). If the brake control is switched from the high braking force control to the low braking force control before the deceleration of the engine-equipped vehicle 1 reaches the deceleration obtained under the high braking force control (V4), the deceleration of the engine-equipped vehicle decreases toward the deceleration obtained under the low braking force control (V2) instead of the high braking force control.

When the switching between the high braking force control and the low braking force control is performed with high frequency as illustrated above, the deceleration of the engine-equipped vehicle 1 is kept at a level between the deceleration obtained under the high braking force control (V4) and the deceleration obtained under the low braking force control (V2), as indicated by the broken line V3 in the graph of FIG. 7, for example. In other words, when the switching between the short-circuit control and the charge control is performed with high frequency, the deceleration is kept at a level between the deceleration obtained under the short-circuit control (V2) and the deceleration obtained under the charge control (V4).

Repeated switching between the charge control and the winding short-circuit control allows a larger braking force to be applied to rotation of the crankshaft 15, as compared with when a current produced in electric power generation by the permanent magnet type AC generator 20 is supplied to the electric power consuming apparatus 70 alone (see the broken line V1 in the graph of FIG. 7). Repeated switching between the charge control and the winding short-circuit control also allows a larger braking force to be applied to rotation of the crankshaft 15, as compared with under the winding short-circuit control (see the broken line V2 in the graph of FIG. 7).

When the stator winding W is in the short-circuit state, a power generation current of the permanent magnet type AC generator 20 flows to the stator windings W of the permanent magnet type AC generator 20. Part of the current flowing in the stator winding W is converted into heat. Part of the current is converted into heat in the switching parts 611 to 616, too.

The number of magnetic pole portions 37a included in the permanent magnet type AC generator 20 is more than the number of teeth 43. Thus, the power generation current of the permanent magnet type AC generator 20 is smaller than a power generation current of a generator configured such that the number of magnetic pole portions is less than the number of teeth, as shown in FIG. 4(B), for example.

In the engine-equipped vehicle 1 of this embodiment, the power generation current of the permanent magnet type AC generator 20 is small. This can suppress heat generation in the permanent magnet type AC generator 20 and in the switching parts 611 to 616. A heat release structure can be simplified and downsized. Accordingly, improved installability of the device is obtained.

In this embodiment, in at least part of a period in which an instruction to decrease rotational power of the engine 10 is given by the acceleration operator 8 (acceleration command part) while the engine-equipped vehicle 1 is in motion, the control device 60 performs the following control. The control device 60 directs the plurality of switching parts 611 to 616 to bring the windings of the permanent magnet type AC generator 20 into the short-circuit state, to produce a braking force against rotation of the crankshaft 15 by an induced voltage, and to decrease the rotational power of the engine 10. As a result, increasing the braking force against rotation of the crankshaft 15 which is produced by the induced voltage and decreasing the rotational power of the engine 10 are implemented in such a manner that a period in which the braking force against rotation of the crankshaft 15 which is produced by the induced voltage increases and a period in which the rotational power of the engine 10 decreases at least partially overlap each other. This makes a difference small between the magnitude of the braking force against rotation of the crankshaft 15 which is produced by the induced voltage and the magnitude of the rotational power of the engine 10. Since the difference is promptly reduced by controlling both the rotational power of the engine 10 and the braking force produced by the induced voltage, the engine braking can be exerted promptly. The braking force against rotation of the crankshaft 15 which is produced by the induced voltage is proportional to the rotation speed of the crankshaft 15, and therefore the engine braking becomes stronger as the speed of the engine-equipped vehicle 1 increases. This embodiment can promptly exert braking which becomes stronger as the speed of the engine-equipped vehicle 1 increases.

[Second Embodiment]

A second embodiment of the present teaching will now be described. This embodiment is a variation different from the first embodiment in that the determination of switching between the short-circuit control and the charge control (S15 of FIG 6) is made on a time basis instead of based on the state of charge of the battery 4. In descriptions of this embodiment, the same reference signs as mentioned in the first embodiment are used, and differences from the first embodiment will be mainly described.

The control device 60 of this embodiment performs the switching in step S15 such that the ratio between a period in which the short-circuit control (S16) is performed and a period in which the charge control (S17) is performed achieves a predefined target ratio. To be more specific, the power generation control unit 622 of the starter power-generator control unit 62 performs the switching such that the period in which the short-circuit control (S16) is performed and the period in which the charge control (S17) is performed achieve periods corresponding to the target ratio.

The target ratio is a ratio that allows the permanent magnet type AC generator 20 to output a current larger than a current consumed by the electric power consuming apparatus 70 during the period of charge control (S17).

When the permanent magnet type AC generator 20 outputs a current larger than a current consumed by the electric power consuming apparatus 70, the battery is charged. That is, it is possible to make the permanent magnet type AC generator 20 output a current larger than a current consumed by the electric power consuming apparatus 70, in a case where the battery is not in the full charge state.

In the short-circuit control (S16), the electric power consuming apparatus 70 operates while consuming electric power charged in the battery 4. The battery 4 is in the discharge state. The state of charge, which indicates the amount of electric power stored in the battery 4, decreases.

If the amount of electric power discharged by the battery 4 under the short-circuit control (S16) is larger than the amount of electric power having been charged during the period of charge control (S17), the battery 4 is continuously charged during the period of charge control (S17). In this case, the permanent magnet type AC generator 20 outputs a current larger than a current consumed by the electric power consuming apparatus 70.

The control device 60 controls the ratio between the period in which the short-circuit control (S16) is performed and the period in which the charge control (S17) is performed such that a larger amount of electric power than the amount of electric power having been charged during the period of charge control (S17) is discharged under the short-circuit control (S16). The control device 60 restricts the period in which the short-circuit control (S16) is performed and the period in which the charge control (S17) is performed, to control the ratio between these periods so as to achieve the target ratio. Here, the target ratio is such a ratio that the amount of electric power discharged by the battery 4 under the short-circuit control (S16) is larger than the amount of electric power having been charged during the period of charge control (S17). The target ratio is predefined based on, for example, specifications of the permanent magnet type AC generator 20, the battery 4, and the electric power consuming apparatus 70 or based on a measurement result. The target ratio between the period of short-circuit control (S16) and the period of charge control (S17) is higher than the ratio between a charging current of the battery 4 under the charge control and a discharging current of the battery 4 under the short-circuit control, for example. Here, the charging current of the battery 4 is equal to a difference between the current of the permanent magnet type AC generator 20 and the current consumed by the electric power consuming apparatus 70. The discharging current of the battery 4 is equal to the current consumed by the electric power consuming apparatus 70. The target ratio is determined in accordance with the speed of the vehicle 1, for example.

When the control device 60 switches between the short-circuit control (S16) and the charge control (S17) such that the ratio between the period of short-circuit control (S16) and the period of charge control (S17) achieves the target ratio, the permanent magnet type AC generator 20 is controlled as follows. In the period of charge control (S17), the permanent magnet type AC generator 20 outputs a current larger than a current consumed by the electric power consuming apparatus 70. As a result, a large braking force is obtained in both the period in which the windings are in the short-circuit state (S16) and the period in which the permanent magnet type AC generator generates electric power (S17).

In this embodiment, the control device 60 controls the ratio between the period in which the short-circuit control (S16) is performed and the period in which the charge control (S17) is performed. The control is switched on a period basis. Accordingly, the switching cycle can be short enough to keep the rider from recognizing a change of the braking force caused by switching.

Reference Signs List

| 1 | engine-equipped vehicle |
| 3a, 3b | wheel |
| 4 | battery |
| 5 | main switch |
| 10 | engine |
| 15 | crankshaft |
| 20 | permanent magnet type AC generator |
| 30 | rotor |
| 37a | magnetic pole portion |
| 40 | stator |
| 43 | teeth |
| 60 | control device |
| 61 | inverter |
| 611 to 616 | switching part |

**Claims**

1. An engine-equipped vehicle (1) comprising:

an engine (10) configured to output rotational power, the engine (10) including a crankshaft (15) that outputs the rotational power to outside of the engine (10);
a drive member (3b) for driving the engine-equipped vehicle (1) by receiving rotational power outputted from the engine (10) via the crankshaft (15);
a permanent magnet type AC generator (20) including a rotor (30) and a stator (40), the rotor (30) having a permanent magnet (37) and being connected to the crankshaft (15) at a location outside a power transmission path (PT) between the crankshaft (15) and the drive member (3b) such that the rotor (30) rotates with its speed ratio to the crankshaft (15) being fixed, the stator (40) having a winding (W) provided so as to correspond to at least one phase, the permanent magnet type AC generator (20) being configured to be driven by the engine (10) to generate electric power when the engine (10) is in a combustion operation;
a battery (4);
an inverter (61) disposed between the permanent magnet type AC generator (20) and the battery (4), the inverter (61) including a plurality of switching parts (611-616) for adjusting a current to be outputted from the permanent magnet type AC generator (20);
an acceleration command part (8) for instructing that the rotational power of the engine (10) be increased or decreased in accordance with an operation performed thereon; and
a control device (60),

wherein the control device (60) is configured to direct the plurality of switching parts (611-616) to bring the winding (W) of the permanent magnet type AC generator (20) into a short-circuit state such that the permanent magnet type AC generator (20) applies a braking force to forward rotation of the crankshaft (15),
**characterized in that**
the control device (60) is configured to direct the plurality of switching parts (611-616) to bring the winding (W) of the permanent magnet type AC generator (20) into the short-circuit state such that the permanent magnet type AC generator (20) applies the braking force to forward rotation of the crankshaft (15), in at least part of a period in which an instruction to decrease the rotational power of the engine (10) is given by the acceleration command part (8) while the engine-equipped vehicle (1) is in motion, and
the control device (60) is further configured to, under a state where an instruction to decrease the rotational power of the engine (10) is given by the acceleration command part (8) while the engine-equipped vehicle (1) is in motion:

repeatedly switch between a control of directing the plurality of switching parts (611-616) of the inverter (61) to bring the winding (W) of the permanent magnet type AC generator (20) into a short-circuit state such that the permanent magnet type AC generator (20) applies a braking force to forward rotation of the crankshaft (15) and a control of directing the plurality of switching parts (611-616) to supply the battery (4) with a current produced in electric power generation by the permanent magnet type AC generator (20); and
control a ratio between a period (T2) in which the control of directing the plurality of switching parts (611-616) to bring the winding (W) of the permanent magnet type AC generator (20) into a short-circuit state is applied and a period (T1) in which the control of directing the plurality of switching parts (611-616) to supply the battery (4) with a current produced in electric power generation by the permanent magnet type AC generator (20) is applied, the control of the ratio being performed so as to allow the permanent magnet type AC generator (20) to output a current (Ig) larger than a current consumed by an electric power consuming apparatus during the period (T1) in which the control of directing the plurality of switching parts (611-616) to supply the battery (4) with a current produced in electric power generation by the permanent magnet type AC generator (20) is applied, the electric power consuming apparatus consuming electric power generated by the permanent magnet type AC generator (20).

2. The engine-equipped vehicle (1) according to claim 1, wherein
the control device (60) is further configured to, under a state where an instruction to decrease the rotational power of the engine (10) is given by the acceleration command part (8) while the engine-equipped vehicle (1) is in motion, switche between a control of directing the plurality of switching parts (611-616) included in the inverter (61) to bring the winding (W) of the permanent magnet type AC generator (20) into a short-circuit state such that the permanent magnet type AC generator (20) applies a braking force to forward rotation of the crankshaft (15) and a control of directing the plurality of switching parts (611-616) to supply the battery (4) with a current produced in electric power generation by the permanent magnet type AC generator (20) rotated by the crankshaft (15).

3. The engine-equipped vehicle (1) according to claim 1 or 2, further comprising a clutch (CL) configured to switch between a state of transmitting rotational power of the crankshaft (15) to the drive member (3b) and a state of blocking the transmission in accordance with the rotation speed of the crankshaft (15), wherein
the control device (60) is further configured to, in at least part of a period in which an instruction to decrease the rotational power of the engine (10) is given by the acceleration command part (8) while the engine-equipped vehicle (1) is in motion and the clutch (CL) is in the state of transmitting rotational power, switch between a control of directing the plurality of switching parts (611-616) included in the inverter (61) to bring the winding (W) of the permanent magnet type AC generator (20) into a short-circuit state such that the permanent magnet type AC generator (20) applies a braking force to forward rotation of the crankshaft (15) and a control of directing the plurality of switching parts (611-616) to supply the battery (4) with a current produced in electric power generation by the permanent magnet type AC generator (20), the switching being performed in accordance with the state of charge of the battery (4).

4. The engine-equipped vehicle (1) according to any one of claims 1 to 3, wherein
the at least one phase comprises a plurality of phases, and
the control device (60) is further configured to, in at least part of a period in which an instruction to decrease the rotational power of the engine (10) is given by the acceleration command part (8) while the engine-equipped vehicle (1) is in motion, direct the plurality of switching parts (611-616) to bring the windings (W) belonging to all of the plurality of phases into a short-circuit state such that the permanent magnet type AC generator (20) applies a braking force to forward rotation of the crankshaft (15).

5. The engine-equipped vehicle (1) according to any one of claims 1 to 3, wherein
the at least one phase comprises a plurality of phases, and
the control device (60) is further configured to, in at least part of a period in which an instruction to decrease the rotational power of the engine (10) is given by the acceleration command part (8) while the engine-equipped vehicle (1) is in motion, bring the winding (W) or windings (W) belonging to part of the plurality of phases into a short-circuit state such that the permanent magnet type AC generator (20) applies a braking force to forward rotation of the crankshaft (15).

6. The engine-equipped vehicle (1) according to any one of claims 1 to 5, wherein
the stator (40) includes a stator core (ST) provided with a plurality of teeth (43) spaced from one another by a slot (SL) in a circumferential direction, each of the plurality of teeth (43) having a portion where the winding (W) is wound, and
the rotor (30) includes a permanent magnet part (37) and a plurality of magnetic pole portions (37a), the number of the plurality of magnetic pole portions (37a) being more than the number of the plurality of teeth (43), the plurality of magnetic pole portions (37a) being formed by the permanent magnet part (37) and provided on a surface facing the stator (40).

**Patentansprüche**

1. Mit Motor ausgestattetes Fahrzeug (1), umfassend:

einen Motor (10), der so ausgeführt ist, dass er Drehkraft ausgibt, wobei der Motor (10) eine Kurbelwelle (15) enthält, die die Drehkraft von dem Motor (10) nach außen ausgibt;
ein Antriebselement (3b) zum Antreiben des mit Motor ausgestatteten Fahrzeugs (1) durch Empfangen von dem Motor (10) über die Kurbelwelle (15) ausgegebener Drehkraft;
einen Wechselstromgenerator (20) mit Permanentmagnet, der einen Läufer (30) und einen Ständer (40) umfasst, wobei der Läufer (30) einen Permanentmagneten (37) aufweist und mit der Kurbelwelle (15) an einer Stelle außerhalb eines Kraftübertragungsweges (PT) zwischen der Kurbelwelle (15) und dem Antriebselement (3b) so verbunden ist, dass sich der Läufer (30) dreht, wobei sein Drehzahlverhältnis zu der Kurbelwelle (15) fest ist, der Ständer (40) eine Wicklung (W) aufweist, die so eingerichtet ist, dass sie wenigstens einer Phase entspricht, der Wechselstromgenerator (20) mit Permanentmagnet so ausgeführt ist, dass er durch den Motor (10) angetrieben wird, um elektrischen Strom zu erzeugen, wenn der Motor (10) in einem Verbrennungsbetrieb arbeitet;

eine Batterie (4);

einen Wechselrichter (61), der zwischen dem Wechselstromgenerator (20) mit Permanentmagnet und der Batterie (4) angeordnet ist, wobei der Wechselrichter (61) eine Vielzahl von Schalt-Teilen (611-616) zum Regulieren eines von dem Wechselstromgenerator (20) mit Permanentmagnet auszugebenden Stroms einschließt;

einen Beschleunigungsbefehl-Teil (8), mit dem entsprechend einer daran ausgeführten Betätigung angewiesen wird, die Drehkraft des Motors (10) zu erhöhen oder zu verringern; sowie

eine Steuerungsvorrichtung (60),

wobei die Steuerungsvorrichtung (60) so ausgeführt ist, dass sie die Vielzahl von Schalt-Teilen (611-616) anweist, die Wicklung (W) des Wechselstromgenerators (20) mit Permanentmagnet in einen Kurzschlusszustand zu versetzen, so dass der Wechselstromgenerator (20) mit Permanentmagnet eine Bremskraft gegen Vorwärtsdrehung der Kurbelwelle (15) ausübt,

**dadurch gekennzeichnet, dass**

die Steuerungsvorrichtung (60) so ausgeführt ist, dass sie die Vielzahl von Schalt-Teilen (611-616) anweist, die Wicklung (W) des Wechselstromgenerators (20) mit Permanentmagnet in den Kurzschlusszustand zu versetzen, so dass der Wechselstromgenerator (20) mit Permanentmagnet die Bremskraft gegen Vorwärtsdrehung der Kurbelwelle (15) in wenigstens einem Teil einer Periode ausübt, in der eine Anweisung zum Verringern der Drehkraft des Motors (10) durch den Beschleunigungsbefehl-Teil (8) erteilt wird, während das mit Motor ausgestattete Fahrzeug (1) in Bewegung ist, und

die Steuerungsvorrichtung (60) des Weiteren so ausgeführt ist, dass sie in einem Zustand, in dem eine Anweisung zum Verringern der Drehkraft des Motors (10) durch den Beschleunigungsbefehl-Teil (8) erteilt wird, während das mit Motor ausgestattete Fahrzeug (1) in Bewegung ist:

wiederholt zwischen einer Steuerung, mit der die Vielzahl von Schalt-Teilen (611-616) des Wechselrichters (61) angewiesen wird, die Wicklung (W) des Wechselstromgenerators (20) mit Permanentmagnet in einen Kurzschlusszustand zu versetzen, so dass der Wechselstromgenerator (20) mit Permanentmagnet eine Bremskraft gegen Vorwärtsdrehung der Kurbelwelle (15) ausübt, und einer Steuerung umschaltet, mit der die Vielzahl von Schalt-Teilen (611-616) angewiesen wird, der Batterie (4) einen bei Erzeugung von elektrischem Strom durch den Wechselstromgenerator (20) mit Permanentmagnet erzeugten Strom zuzuführen; und

ein Verhältnis zwischen einer Periode (T2), in der die Steuerung angewendet wird, mit der die Vielzahl von Schalt-Teilen (611-616) angewiesen wird, die Wicklung (W) des Wechselstromgenerators (20) mit Permanentmagnet in einen Kurzschlusszustand zu versetzen, und einer Periode (T1) steuert, in der die Steuerung angewendet wird, mit der die Vielzahl von Schalt-Teilen (611-616) angewiesen wird, der Batterie (4) einen bei Erzeugung von elektrischem Strom durch den Wechselstromgenerator (20) mit Permanentmagnet erzeugten Strom zuzuführen, wobei die Steuerung des Verhältnisses so durchgeführt wird, dass zugelassen wird, dass der Wechselstromgenerator (20) mit Permanentmagnet einen Strom (Ig) ausgibt, der größer ist als ein Strom, der von einem elektrischen Strom verbrauchenden Aggregat während der Periode (T1) verbraucht wird, in der Steuerung angewendet wird, mit der die Vielzahl von Schalt-Teilen (611-616) angewiesen wird, der Batterie (4) einen bei Erzeugung von elektrischem Strom durch den Wechselstromgenerator (20) mit Permanentmagnet erzeugten Strom zuzuführen, wobei das elektrischen Strom verbrauchende Aggregat durch den Wechselstromgenerator (20) mit Permanentmagnet erzeugten elektrischen Strom verbraucht.

2. Mit Motor ausgestattetes Fahrzeug (1) nach Anspruch 1, wobei

die Steuerungsvorrichtung (60) des Weiteren so ausgeführt ist, dass sie in einem Zustand, in dem eine Anweisung zum Verringern der Drehkraft des Motors (10) durch den Beschleunigungsbefehl-Teil (8) erteilt wird, während das mit Motor ausgestattete Fahrzeug (1) in Bewegung ist, zwischen einer Steuerung, mit der die in dem Wechselrichter (61) enthaltene Vielzahl von Schalt-Teilen (611-616) angewiesen wird, die Wicklung (W) des Wechselstromgenerators (20) mit Permanentmagnet in einen Kurzschlusszustand zu versetzen, so dass der Wechselstromgenerator (20) mit Permanentmagnet eine Bremskraft gegen Vorwärtsdrehung der Kurbelwelle (15) ausübt, und einer Steuerung umschaltet, mit der die Vielzahl von Schalt-Teilen (611-616) angewiesen wird, der Batterie (4) einen bei Erzeugung von elektrischem Strom durch den von der Kurbelwelle (15) gedrehten Wechselstromgenerator (20) mit Permanentmagnet erzeugten Strom zuzuführen.

3. Mit Motor ausgestattetes Fahrzeug (1) nach Anspruch 1 oder 2, das des Weiteren eine Kupplung (CL) umfasst, die so ausgeführt ist, dass sie entsprechend der Drehzahl der Kurbelwelle (15) zwischen einem Zustand, in dem Drehkraft der Kurbelwelle (15) auf das Antriebselement (3b) übertragen wird, und einem Zustand umschaltet, in dem die Übertragung blockiert wird, wobei

   die Steuerungsvorrichtung (60) des Weiteren so ausgeführt ist, dass sie in wenigstens einem Teil einer Periode, in der eine Anweisung zum Verringern der Drehkraft des Motors (10) durch den Beschleunigungsbefehl-Teil (8) erteilt wird, während das mit Motor ausgestattete Fahrzeug (1) in Bewegung ist und sich die Kupplung (CL) in einem Zustand befindet, in dem Drehkraft übertragen wird, zwischen einer Steuerung, mit der die in dem Wechselrichter (61) enthaltene Vielzahl von Schalt-Teilen (611-616) angewiesen wird, die Wicklung (W) des Wechselstromgenerators (20) mit Permanentmagnet in einen Kurzschlusszustand zu versetzen, so dass der Wechselstromgenerator (20) mit Permanentmagnet eine Bremskraft gegen Vorwärtsdrehung der Kurbelwelle (15) ausübt, und einer Steuerung umschaltet, mit der die Vielzahl von Schalt-Teilen (611-616) angewiesen wird, der Batterie (4) einen bei Erzeugung von elektrischem Strom durch den von der Kurbelwelle (15) gedrehten Wechselstromgenerator (20) mit Permanentmagnet erzeugten Strom zuzuführen, wobei das Umschalten entsprechend dem Ladezustand der Batterie (4) durchgeführt wird.

4. Mit Motor ausgestattetes Fahrzeug (1) nach einem der Ansprüche 1 bis 3, wobei
   die wenigstens eine Phase eine Vielzahl von Phasen umfasst, und
   die Steuerungsvorrichtung (60) des Weiteren so ausgeführt ist, dass sie in wenigstens einem Teil einer Periode, in der eine Anweisung zum Verringern der Drehkraft des Motors (10) durch den Beschleunigungsbefehl-Teil (8) erteilt wird, während das mit Motor ausgestattete Fahrzeug (1) in Bewegung ist, die Vielzahl von Schalt-Teilen (611-616) anweist, die zu allen der Vielzahl von Phasen gehörenden Wicklungen (W) in einen Kurzschlusszustand zu versetzen, so dass der Wechselstromgenerator (20) mit Permanentmagnet eine Bremskraft gegen Vorwärtsdrehung der Kurbelwelle (15) ausübt.

5. Mit Motor ausgestattetes Fahrzeug (1) nach einem der Ansprüche 1 bis 3, wobei
   die wenigstens eine Phase eine Vielzahl von Phasen umfasst, und
   die Steuerungsvorrichtung (60) des Weiteren so ausgeführt ist, dass sie in wenigstens einem Teil einer Periode, in der eine Anweisung zum Verringern der Drehkraft des Motors (10) durch den Beschleunigungsbefehl-Teil (8) erteilt wird, während das mit Motor ausgestattete Fahrzeug (1) in Bewegung ist, die Wicklung (W) oder Wicklungen (W), die zu einem Teil der Vielzahl von Phasen gehört/gehören, in einen Kurzschlusszustand versetzt, so dass der Wechselstromgenerator (20) mit Permanentmagnet eine Bremskraft gegen Vorwärtsdrehung der Kurbelwelle (15) ausübt.

6. Mit Motor ausgestattetes Fahrzeug (1) nach einem der Ansprüche 1 bis 5, wobei
   der Ständer (40) ein Ständerblechpaket (ST) aufweist, das mit einer Vielzahl von Zähnen (43) versehen ist, die durch einen Schlitz (SL) in einer Umfangsrichtung voneinander beabstandet sind, wobei jeder der Vielzahl von Zähnen (43) einen Abschnitt aufweist, in den die Wicklung (W) gewickelt ist, und der Läufer (30) einen Permanentmagnet-Teil (37) sowie eine Vielzahl von Magnetpol-Abschnitten (37a) aufweist, wobei die Anzahl der Vielzahl von Magnetpol-Abschnitten (37a) größer ist als die Anzahl der Vielzahl von Zähnen (43) und die Vielzahl von Magnetpol-Abschnitten (37a) durch den Permanentmagnet-Teil (37) gebildet wird und an einer dem Ständer (40) zugewandten Fläche vorhanden ist.

## Revendications

1. Véhicule équipé d'un moteur (1) comprenant:

   un moteur (10) configuré pour fournir une puissance de rotation, le moteur (10) comprenant un vilebrequin (15) qui fournit la puissance de rotation à l'extérieur du moteur (10);
   un organe d'entraînement (3b) pour entraîner le véhicule équipé d'un moteur (1) en recevant la puissance de rotation du moteur (10) par l'intermédiaire du vilebrequin (15);
   un générateur de courant alternatif (20) du type à aimant permanent comprenant un rotor (30) et un stator (40), le rotor (30) ayant un aimant permanent (37) et étant relié au vilebrequin (15) à un endroit situé en dehors d'un trajet de transmission de puissance (PT) entre le vilebrequin (15) et l'élément d'entraînement (3b) de telle sorte que le rotor (30) tourne avec son rapport de vitesse au vilebrequin (15) qui est fixe, le stator (40) ayant un enroulement (W) prévu de manière à correspondre à au moins une phase, le générateur de courant alternatif (20) de type à aimant permanent étant configuré pour être entraîné par le moteur (10) afin de générer de l'énergie électrique lorsque le moteur (10) est en opération de combustion;

une batterie (4);

un onduleur (61) disposé entre le générateur de courant alternatif de type à aimant permanent (20) et la batterie (4), l'onduleur (61) comprenant une pluralité de pièces de commutation (611-616) pour ajuster un courant à sortir du générateur de courant alternatif de type à aimant permanent (20);

une partie de commande d'accélération (8) pour ordonner que la puissance de rotation du moteur (10) soit augmentée ou diminuée en fonction d'une opération effectuée sur celui-ci; et

un dispositif de commande (60),

dans lequel le dispositif de commande (60) est configuré pour diriger la pluralité de pièces de commutation (611- 616) pour amener l'enroulement (W) du générateur de courant alternatif de type à aimant permanent (20) dans un état de court-circuit de telle sorte que le générateur de courant alternatif de type à aimant permanent (20) applique une force de freinage à la rotation vers l'avant du vilebrequin (15),

**caractérisé en ce que**

le dispositif de commande (60) est configuré pour diriger la pluralité de pièces de commutation (611-616) pour amener l'enroulement (W) du générateur de courant alternatif de type à aimant permanent (20) dans l'état de court-circuit de telle sorte que le générateur de courant alternatif de type à aimant permanent (20) applique la force de freinage à la rotation vers l'avant du vilebrequin (15), dans au moins une partie d'une période pendant laquelle une instruction de diminuer la puissance de rotation du moteur (10) est donnée par la pièce de commande d'accélération (8) alors que le véhicule équipé du moteur (1) est en mouvement, et le dispositif de commande (60) est en outre configuré pour, dans un état où une instruction de diminuer la puissance de rotation du moteur (10) est donnée par la partie de commande d'accélération (8) alors que le véhicule équipé du moteur (1) est en mouvement :

pour commuter de manière répétée entre une commande de direction de la pluralité de pièces de commutation (611-616) de l'onduleur (61) pour amener l'enroulement (W) du générateur de courant alternatif de type à aimant permanent (20) dans un état de court-circuit de sorte que le générateur de courant alternatif de type à aimant permanent (20) applique une force de freinage à la rotation vers l'avant du vilebrequin (15) et une commande de direction de la pluralité de pièces de commutation (611-616) pour alimenter la batterie (4) avec un courant produit dans la production d'énergie électrique par le générateur de courant alternatif de type à aimant permanent (20); et

pour commander un rapport entre une période (T2) dans laquelle la commande de direction de la pluralité de pièces de commutation (611-616) pour amener l'enroulement (W) du générateur de courant alternatif de type à aimant permanent (20) dans un état de court-circuit est appliquée et une période (T1) dans laquelle la commande de direction de la pluralité de pièces de commutation (611-616) pour alimenter la batterie (4) avec un courant produit dans la production d'énergie électrique par le générateur de courant alternatif de type à aimant permanent (20) est appliquée, la commande du rapport étant effectuée de manière à permettre au générateur de courant alternatif de type à aimant permanent (20) de produire un courant (Ig) plus grand qu'un courant consommé par un appareil consommateur d'énergie électrique pendant la période (T1) au cours de laquelle est appliquée la commande de direction de la pluralité de pièces de commutation (611-616) pour alimenter la batterie (4) avec un courant produit dans la production d'énergie électrique par le générateur de courant alternatif de type à aimant permanent (20), l'appareil consommateur d'énergie électrique consommant l'énergie électrique produite par le générateur de courant alternatif de type à aimant permanent (20).

2. Véhicule équipé d'un moteur (1) selon la revendication 1, dans lequel
le dispositif de commande (60) est en outre configuré pour, dans un état où une instruction de diminuer la puissance de rotation du moteur (10) est donnée par la partie de commande d'accélération (8) alors que le véhicule équipé du moteur (1) est en mouvement, commuter entre une commande de direction de la pluralité de parties de commutation (611-616) incluses dans l'onduleur (61) pour amener l'enroulement (W) du générateur de courant alternatif de type à aimant permanent (20) dans un état de court-circuit tel que le générateur de courant alternatif de type à aimant permanent (20) applique une force de freinage à la rotation vers l'avant du vilebrequin (15) et une commande de direction de la pluralité de pièces de commutation (611-616) pour alimenter la batterie (4) avec un courant produit dans la production d'énergie électrique par le générateur de courant alternatif de type à aimant permanent (20) mis en rotation par le vilebrequin (15).

**3.** Véhicule équipé d'un moteur (1) selon les revendications 1 ou 2, comprenant en outre un embrayage (CL) configuré pour commuter entre un état de transmission de la puissance de rotation du vilebrequin (15) à l'organe d'entraînement (3b) et un état de blocage de la transmission en fonction de la vitesse de rotation du vilebrequin (15), dans lequel
le dispositif de commande (60) est en outre configuré pour, dans au moins une partie d'une période pendant laquelle une instruction de diminuer la puissance de rotation du moteur (10) est donnée par la partie de commande d'accélération (8) alors que le véhicule équipé du moteur (1) est en mouvement et que l'embrayage (CL) est en état de transmettre la puissance de rotation, commutation entre une commande de direction de la pluralité de pièces de commutation (611-616) incluses dans l'onduleur (61) pour amener l'enroulement (W) du générateur de courant alternatif de type à aimant permanent (20) dans un état de court-circuit de telle sorte que le générateur de courant alternatif de type à aimant permanent (20) applique une force de freinage à la rotation vers l'avant du vilebrequin (15) et une commande de direction de la pluralité de pièces de commutation (611-616) pour alimenter la batterie (4) avec un courant produit dans la production d'énergie électrique par le générateur de courant alternatif de type à aimant permanent (20), la commutation étant effectuée en fonction de l'état de charge de la batterie (4).

**4.** Véhicule équipé d'un moteur (1) selon l'une quelconque des revendications 1 à 3, dans lequel
la phase au moins comprend plusieurs phases, et
le dispositif de commande (60) est en outre configuré pour, dans au moins une partie d'une période pendant laquelle une instruction de diminuer la puissance de rotation du moteur (10) est donnée par la partie de commande d'accélération (8) alors que le véhicule équipé du moteur (1) est en mouvement, diriger la pluralité de parties de commutation (611-616) pour amener les enroulements (W) appartenant à la totalité de la pluralité de phases dans un état de court-circuit de telle sorte que le générateur CA de type à aimant permanent (20) applique une force de freinage à la rotation vers l'avant du vilebrequin (15).

**5.** Véhicule équipé d'un moteur (1) selon l'une quelconque des revendications 1 à 3, dans lequel
la phase au moins comprend plusieurs phases, et
le dispositif de commande (60) est en outre configuré pour, dans au moins une partie d'une période pendant laquelle une instruction de diminuer la puissance de rotation du moteur (10) est donnée par la partie de commande d'accélération (8) alors que le véhicule équipé du moteur (1) est en mouvement, amener le ou les enroulements (W) appartenant à une partie de la pluralité de phases dans un état de court-circuit de telle sorte que le générateur de courant alternatif de type à aimant permanent (20) applique une force de freinage à la rotation vers l'avant du vilebrequin (15).

**6.** Véhicule équipé d'un moteur (1) selon l'une quelconque des revendications 1 à 5, dans lequel
le stator (40) comprend un noyau de stator (ST) muni d'une pluralité de dents (43) espacées les unes des autres par une fente (SL) dans une direction circonférentielle, chacune de la pluralité de dents (43) ayant une partie où l'enroulement (W) est enroulé, et
le rotor (30) comprend une partie d'aimant permanent (37) et une pluralité de parties de pôle magnétique (37a), le nombre de la pluralité de parties de pôle magnétique (37a) étant supérieur au nombre de la pluralité de dents (43), la pluralité de parties de pôle magnétique (37a) étant formée par la partie d'aimant permanent (37) et prévue sur une surface faisant face au stator (40).

FIG.1

EP 3 407 482 B1

FIG.2

28

FIG.3

FIG.4

(A)

OUTPUT TORQUE (N·m)

ROTATION
SPEED (rpm)

(B)

POWER GENERATION
CURRENT (A)

FIG.5

EP 3 407 482 B1

FIG.6

FIG.7

FIG.8

FIG.9

(A)

20   61   Ig   4

INVERTER   BATTERY

70

(B)

20   61   0   4

INVERTER   BATTERY

70

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012225443 A
- WO 2015093577 A1
- JP 2014079099 A